# EUROPEAN PATENT SPECIFICATION

(11) **EP 1 892 253 B1**
(45) Date of publication and mention of the grant of the patent: **16.02.2011**
(21) Application number: 06766775.8
(22) Date of filing: 15.06.2006
(51) Int. Cl.: C08F 255/00, C08F 10/00, C08F 4/6592, C08F 8/42, C08F 230/08

(54) **MODIFIED ALPHA-OLEFIN POLYMER AND PROCESS FOR PRODUCTION OF CROSS-LINKED PRODUCT THEREOF**
MODIFIZIERTES ALPHA-OLEFIN-POLYMER UND HERSTELLUNGSVERFAHREN FÜR EIN VERNETZTES PRODUKT DARAUS
POLYMÈRE D'ALPHA-OLÉFINE MODIFIÉ ET PROCÉDÉ POUR LA PRODUCTION D'UN PRODUIT RÉTICULÉ DE CELUI-CI

(30) Priority: 15.06.2005 JP 2005175429
(43) Date of publication of application: 27.02.2008
(73) Proprietor: IDEMITSU KOSAN CO., LTD., Tokyo 100-8321 (JP)
(72) Inventor: FUJIMURA, Takenori, 2990193 (JP); AKIBA, Iwao, Tokyo (JP); MINAMI, Yutaka, Ichihara-shi, Chiba 2990193 (JP); FUJIOKA, Toyozo, 2990193 (JP)
(74) Representative: Vossius & Partner
(86) International application number: PCT/JP2006/312041
(87) International publication number: WO 2006/135009

(56) References cited:
- EP-A- 1 498 434
- WO-A1-03/070790
- JP-A- 2000 095 820
- JP-A- 2000 204 127
- JP-A- 2000 256 411
- JP-A- 2005 068 423
- BRULL R. ET AL.: 'Polymerization of Higher Linear alpha-olefins with (CH3)2Si(2-methylbenz[e]indenyl)2ZrCl2' JOURNAL OF POLYMER SCIENCE PART A: POLYMER 2000, pages 2333 - 2339, XP003005513

## Description

The present invention relates to a modified α-olefin polymer with a low melting temperature and applicable at low temperature coating and a process for production of cross-linked product thereof, and in more detail a modified α-olefin polymer used as (reactive) hot melt adhesives, sealants, modifiers for resins and elastomers, wax blending agents, filler blending agents, resin modifiers, paint components, ink components, adhesive components, primer components, lubricating oil components, heat storage components, high performance waxes, and the like and a process for production of a cross-linked product thereof.

In recent years, awareness of global environmental problems, working environment and safety and health of workers has risen high. In such circumstance, for example, substances capable of low temperature coating have been desired in a field of hot melt adhesives because conventional hot melt adhesives have a melting point at 150°C or above and requires heating. If a hot melt adhesive allows coating at low temperature, such adhesive is expected to enjoy such advantages that 1) the adhesive can be used in heat sensitive base materials, 2) working environment of workers may be improved and safety and health may be kept well, 3) the adhesive is thermal degradation resistant, and (4) the viscosity changes little. However, in fact there are very few resin compositions capable of low temperature coating in the field of hot melt adhesives.

As a hot melt adhesive, there is a commercial product, for example, called "Tyforce" from Kansai Polymer Institute Ltd. This product can be used for low temperature coating at 100 to 120°C and is applicable to heat sensitive materials, but has such a drawback as requiring curing of 3 to 5 days since crosslinking is effected with moisture in air and a long retaining time to reach the operational strength because it is a reactive urethane-based hot melt adhesive. There is also a commercial product called "Vestoplast" from Degussa Huels AG This product is a silane-modified amorphous polypropylene resin composition and excellent in adhesiveness, but it is already in a melted state, which disallows low temperature coating because it is mainly composed of APP (atactic polypropylene). Further, it is amorphous so that it has such a drawback as poor strength. There is no resin composition suitable for low temperature coating and in particular, no known composition to allow low temperature coating below 100°C thus far. A polyolefin composition capable of low temperature coating is most preferable when placing a high value on a position of environmental consciousness.

While ethylene-vinyl acetate copolymers, styrene-isoprene-styrene block copolymers or styrene-butadiene-styrene block copolymers, and the like have been heretofore used in application as the hot melt adhesives and the like, and polyetherpolyols and the like are used in the reactive hot melt application, demand for adhesiveness to polyolefin materials has recently increased. However, the materials above have such a drawback as poor adhesiveness to polyolefins and decomposition with gas release because of low thermal stability when heated for coating. Further, there are materials, of which conventional polyolefin is provided with reactive groups, but these materials have such a drawback as high melting temperature because of high crystallinity of polyolefin, thus unfitting for low temperature coating.

On the other hand, studies on polymerization of α-olefins are mainly performed using Ziegler-Natta based catalysts (for example, see Patent Document 1, Non-patent Document 1, Non-patent Document 2 and Non-patent Document 3).
However, α-olefin polymers obtained according to these documents are demonstrated to have low molecular weight, high melting point because of high regularity, or inhomogeneity with two melting points.

It is described that homogeneous catalysts so called metallocene catalysts can yield higher α-olefin polymers (for example, see Non-patent Document 4, Non-patent Document 5, Non-patent Document 6 and Non-patent Document 7). However, as found in the polymer obtained in the heterogeneous catalysts, it has been demonstrated that the polymer has insufficiently high molecular weight, too high melting point because of regularity and inhomogeneity with two melting points.

Patent Document 1: Japanese Patent Laid-Open Publication No. H7-145205
Non-patent Document 1: Polymer J., 10, 619 (1978)
Non-patent Document 2: Macromol. Chem., 190, 2683 (1989)
Non-patent Document 3: Macromol. Chem., Rapid Comm., 13, 447 (1992)
Non-patent Document 4: Macromol. Sci. Pure Appl. Chem., A35, 473 (1998)
Non-patent Document 5: J. Polym. Sci. A, 38, 233 (2000)
Non-patent Document 6: Macromol. Mater. Eng., 286, 350 (2001)
Non-patent Document 7: Macromol. Mater. Eng., 286, 480 (2001)

The present invention has been addressed to the circumstances above and has an object to provide a polyolefin-based composition with controlled polyolefin crystallinity (stereo-regularity), homogeneous composition, high flowability and capability of low temperature coating, and a process for production of a cross-linked product thereof,

The present inventors have earnestly studied to achieve the object above and have found that use of a specific metallocene-based catalyst in olefin polymerization allows manufacturing of a polyolefin with controlled crystallinity (stereo-regularity) thereof homogeneous composition and high flowability, and that a modified polyolefin thereof provided with a reactive silane group has an appropriate molecular weight distribution and a composition distribution, a low melting point, excellent low temperature coating properties required for a reactive hot melt, no decomposed gas generation because of a polyolefin-based material and good adhesiveness to a polyolefin. The present invention has been accomplished based on such findings.

That is, the present invention provides
1. A modified α-olefin polymer obtained by reacting the following components (i), (ii) and (iii) together:
   (i) an α-olefin polymer obtained by homopolymerization of an α-olefin having 3 or more carbon atoms or copolymerization of two or more kinds of α-olefins having 3 or more carbon atoms in the presence of a polymerization catalyst containing (A) a transition metal compound represented by the following general formula (I) and (B) at least one component selected from (B-1) a compound capable of forming an ionic complex by reacting with the (A) component of the transition metal compound or a derivative thereof and (B-2) an aluminoxane, satisfying the following (1) to (3) of
      (1) a mesopentad fraction (mmmm) in the range of 25 to 75 mol % or a stereoregularity index ([M4]) of 75 mol % or less,
      (2) a molecular weight distribution converted to polystyrene equivalent determined by a gel permeation chromatography (GPC) method of 3.0 or less and
      (3) an intrinsic viscosity [η] determined in a tetralin solvent at 135°C of 0.01 to 5.0 dL/g,
   (ii) a radical initiator and
   (iii) a monomer with a silane group and an ethylenic unsaturated group or silane coupling agent,

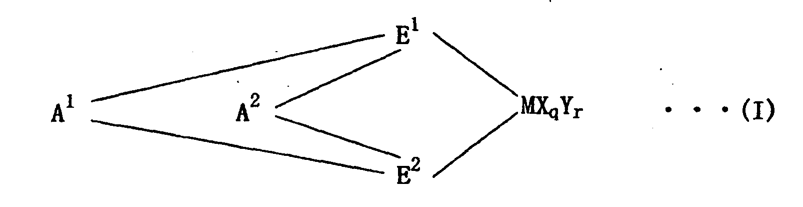

(in which M represents a metal element in group 3 to 10 of the periodic table or a lanthanide metal element, E¹ and E² each represent a ligand selected from substituted cyclopentadienyl, indenyl, substituted indenyl, heterocyclopentadienyl, substituted heterocyclopentadienyl, amide, phosphide, hydrocarbon and silicon-containing groups to form a cross-linked structure through A¹ and A² and may be identical or different each other, X represents a σ-bonding ligand and a plurality of X may be identical or different and cross-linked with other X, E¹, E² or Y when X are plural. Y represents a Lewis base and a plurality of Y may be identical or different and cross-linked with other Y, E¹, E² or X when Y is plural, A¹ and A² are a divalent cross-linking group linking two ligands and represent a hydrocarbon group having 1 to 20 carbon atoms, a halogen-containing hydrocarbon group having 1 to 20 carbon atoms, a silicon-containing group, a germanium-containing group, tin-containing group, -O-, -CO-, -S-, -SO₂-, -Se-, -NR¹-, -PR¹-, -P(O)R¹-, -BR¹- or -AlR¹- and R¹ represents hydrogen atom, halogen atom, a hydrocarbon group having 1 to 20 carbon atoms or a halogen-containing hydrocarbon group having 1 to 20 carbon atoms and may be identical or different each other. The letter q is an integer of 1 to 5 indicating [(valency of M) - 2] and r represents an integer of 0 to 3),

2. The modified α-olefin polymer according to 1 above satisfying (1) to (4) below:
   (1) a mesopentad fraction (mmmm) in the range of 20 to 75 mol % or a stereoregularity index ([M4]) of 75 mol % or less,
   (2) a molecular weight (Mw) converted to polystyrene equivalent determined by a GPC method and Mw/Mn in the range of 1000 to 10,000,000 and 1.5 or higher, respectively,
   (3) a content of the component derived from the monomer with the silane group and the ethylenic unsaturated group being in the range of 0.01 to 50 mol % and
   (4) a melting point in the range of 40 to 100°C,

3. The modified α-olefin polymer according to 1 or 2 above, in which the monomer with the silane group and the ethylenic unsaturated group is a monomer having an alkoxysilane group,
4. the modified α-olefin polymer according to any of 1 to 3 above, in which the α-olefin having 3 or more carbon atoms is selected from one kind or more of propylene, 1-butene, 1-pentene, 1-hexene, 1-octene, 1-nonene, 1-decene (C₁₀), 1-dodecene (C₁₂), 1-tetradecene (C₁₄), 1-hexadecene (C₁₆), 1-octadecene (C₁₈), 1-eicosene (C₂₀), 1-dodecosene (C₂₂), 1-tetracosene (C₂₄), 1-hexacosene (C₂₆), 1-octacosene (C₂₈) and 1-triacontesene (C₃₀),

5. The modified α-olefin polymer according to any of 1 to 4 obtained by melt kneading and/or solution modification,
6. the modified α-olefin polymer according to any of 1 to 5 used in any of (reactive) hot melt adhesives, intermediate films for glass, adhesives for glass, sealants, modifiers for resin and elastomer, wax blending agents, filler blending agents, resin modifiers, paint components, ink components, adhesive components, primer components, lubricating oil components, heat storage components, high performance waxes, cement components, medical equipments, films, sheets, release films, caulking compounds, cable sheaths, electric wire clads, insulation materials, pipes, heat shrink tapes and dispersants and

7. A process for production of a cross-linked product of the modified α-olefin polymer by contacting and heating the modified α-olefin polymer according to any of 1 to 6 with moisture or damp in the presence or absence of a silanol condensation catalyst.

The present invention is detailed below.

### (i) α-Olefin polymers

At first, the modified α-olefin polymer of the present invention is a modified product of an α-olefin polymer obtained by homopolymerization of an α-olefin having 3 or more carbon atoms or copolymerization of two or more kinds of α-olefins having 3 or more carbon atoms.

A linear olefin represented by the following general formula can be used as an α-olefin having 3 or more carbon atoms for the polyolefin.

CH₂=CH-R

(in which R is CₙH₂ₙ₊₁ and n is an integer of 1 or more).

Specifically, α-olefin includes propylene, 1-butene, 1-pentene, 1-hexene, 1-octene, 1-nonene, 1-decene (C₁₀), 1-dodecene (C₁₂), 1-tetradecene (C₁₄), 1-hexadecene (C₁₆), 1-octadecene (C₁₈), 1-eicosene (C₂₀), 1-docosene (C₂₂), 1-tetracosene (C₂₄), 1-hexacosene (C₂₆), 1-octacosene (C₂₈) and 1-triacontesene (C₃₀).
A mixture of two or more kinds of α-olefins may be copolymerized.

The α-olefin polymer used for the modified α-olefin copolymer of the present invention (hereinafter optionally referred to as "the α-olefin polymer in the present invention") is produced using a metallocene-based catalyst.
That is, the α-olefin polymer in the present invention is produced by homopolymerization of an α-olefin having 3 or more carbon atoms or copolymerization of two or more kinds of an α-olefins having 3 or more carbon atoms in the presence of a polymerization catalyst containing (A) a transition metal compound represented by the following general formula (I) and (B) at least one kind of component selected from (B-1) a compound capable of forming an ionic complex by reacting with the (A) component of the transition metal compound or a derivative thereof and (B-2) an aluminoxane.

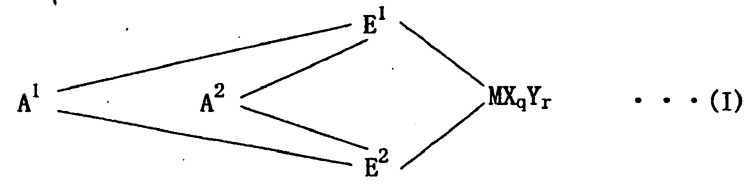

M in the general formula (I) above represents a metal element of group 3 to 10 or a lanthanide metal element in the periodic table and includes as a specific example, titanium, zirconium, hafnium, yttrium, vanadium, chromium, manganese, nickel, cobalt, palladium, lanthanide metals but among them titanium, zirconium and hafnium are preferred in terms of activity in olefin copolymerization.
E¹ and E² each represent a ligand selected from substituted cyclopentadienyl, indenyl, substituted indenyl, heterocyclopentadienyl, substituted heterocyclopentadienyl, amide (-N<), phosphine (-P<), hydrocarbon (>CR- and >C<) and silicon-containing group (>SiR-, and >Si<) (note that R is hydrogen atom, C₁-C₂₀ hydrocarbon or heteroatom-containing group) forming a cross-linked structure through A¹ and A².
E¹ and E² may also be identical or different each other.
Substituted cyclopentadienyl, indenyl and substituted indenyl groups are preferred as these E¹ and E².

Further, X represents a σ-bonding ligand and a plurality of X may be identical or different and cross-linked with other X, E¹, E² or Y when X are plural.
Specific examples of the X include halogen atom, hydrocarbon group having 1 to 20 carbon atoms, alkoxy group having 1 to 20 carbon atoms, aryloxy group having 6 to 20 carbon atoms, amide group having 1 to 20 carbon atoms, silicon-containing group having 1 to 20 carbon atoms, phosphide group having 1 to 20 carbon atoms, sulfide group having 1 to 20 carbon atoms, acyl group having 1 to 20 carbon atoms.
On the other hand, Y represents a Lewis base and a plurality of Y may be identical or different and cross-linked with other Y, E¹, E² or X when Y is plural.
Specific examples of the Y as a Lewis base include amines, ethers, phosphines, thioethers.

Next, A¹ and A² are a divalent cross-linking group bonding two ligands and represent hydrocarbon group having 1 to 20 carbon atoms, halogen-containing hydrocarbon group having 1 to 20 carbon atoms, silicon-containing group, germanium-containing group, tin-containing group, -O-, -CO-, -S-, -SO₂-, -Se-, -NR¹-, -PR¹-, -P(O)R¹-, -BR¹- or -AlR¹- and R¹ represents hydrogen atom, halogen atom, hydrocarbon group having 1 to 20 carbon atoms or halogen-containing hydrocarbon group having 1 to 20 carbon atoms and may be identical or different each other.
Such cross-linking groups include, for example, those represented by the general formula,

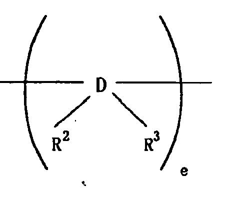

(in which D is a carbon, silicon or tin, R² and R³ each are hydrogen atom or hydrocarbon group having 1 to 20 carbon atoms and may be identical or different each other or linked together to form a ring structure. The letter e represents an integer of 1 to 4.)
and specific examples thereof include methylene, ethylene, ethylidene, propylidene, isopropylidene, cyclohexylidene, 1,2-cyclohexylene, vinylidene (CH₂=C=), dimethylsilylene, diphenylsilylene, methylphenylsilylene, dimethylgermylene, dimethylstannylene, tetramethyldisilylene, diphenyldisilylene.
Among them ethylene, isopropylidene and dimethylsilylene groups are preferred.
The letter q is an integer of 1 to 5 representing [(valency of M) - 2] and r represents an integer of 0 to 3.
Among such transition metal compounds represented by the general formula (I), the transition metal compounds with a double-cross-linked biscyclopentadienyl derivative represented by the general formula (II) as a ligand are preferred.

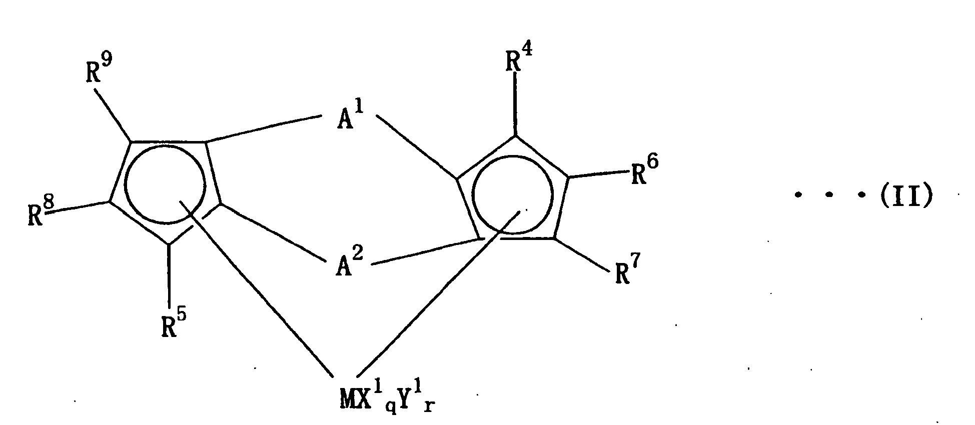

M, A¹, A², q and r in general formula (II) above are the same as those in the general formula (I).
X¹ represents a σ-bonding ligand and a plurality of X¹ may be identical or different and cross-linked with other X¹, or Y¹ when X¹ is plural.
Specific examples of X¹ include those illustrated in the description of X in the general formula (I).
Y¹ represents a Lewis base and a plurality of Y¹ may be identical or different and cross-linked with other X¹ or Y¹ when Y is plural.
Specific examples of Y¹ include those illustrated in the description of Y in the general formula (I).
R⁴ to R⁹ each represent hydrogen atom, halogen atom, hydrocarbon group having 1 to 20 carbon atoms, halogen-containing hydrocarbon group having 1 to 20 carbon atoms, silicon-containing group or heteroatom-containing groups, but at least one of them has to be other than a hydrogen atom.
Also, R⁴ to R⁹ may be identical or different each other and adjacent groups may be linked together to form a ring.
Among them, R⁶ and R⁷ and R⁸ and R⁹ are preferably linked to form a ring, respectively.
A group containing a heteroatom such as an oxygen, halogen or silicon atom is preferred as R⁴ and R⁵ because of higher copolymerization activity.

The transition metal compounds with such double-cross-linked biscylopentadienyl derivatives as a ligand preferably include a silicon atom as a crosslinking group between ligands.
Specific examples of the transition metal compounds represented by the general formula (I) include (1,2'-ethylene)(2,1'-ethylene)bis(indenyl)zirconium dichloride, (1,2'-methylene)(2,1'-methylene)bis(indenyl)zirconium dichloride, (1,2'-isopropylidene)(2, 1'-isopropylidene)bis(indenyl)zirconium dichloride, (1,2'-ethylene)(2,1'-ethylene)bis(3-methylindenyl)zirconium dichloride, (1,2'-ethylene)(2,1'-ethylene)bis(4,5-benzoindenyl)zirconium dichloride, (1,2'-ethylene)(2,1'-ethylene)bis(4-isopropylindenyl)zirconium dichloride, (1,2'-ethylene)(2,1'-ethylene)bis(5,6-dimethylindenyl)zirconium dichloride, (1,2'-ethylene)(2,1'-ethylene)bis(4,7-diisopropylindenyl)zirconium dichloride, (1,2'-ethylene)(2,1'-ethylene)bis(4-phenylindenyl)zirconium dichloride, (1,2'-ethylene)(2,1'-ethylene)bis(3-methyl-4-isopropylindenyl)zirconium dichloride, (1,2'-ethylene)(2,1'-ethylene)bis(5,6-benzoindenyl)zirconium dichloride, (1,2'-ethylene)(2, 1'-isopropylidene)bis(indenyl)zirconium dichloride, (1,2'-methylene)(2,1'-ethylene)bis(indenyl)zirconium dichloride, (1,2'-methylene)(2,1'-isopropylidene)bis(indenyl)zirconium dichloride, (1,2'-dimethylsilylene)(2,1'-dimethylsilylene)bis(indenyl)zirconium dichloride, (1,2'-dimethylsilylene)(2,1'-dimethylsilylene)bis(3-methylindenyl)zirconium dichloride, (1,2'-dimethylsilylene)(2,1'-dimethylsilylene)bis(3-n-butylindenyl)zirconium dichloride, (1,2'-dimethylsilylene)(2,1'-dimethylsilylene)bis(3-i-propylindenyl)zirconium dichloride, (1,2'-dimethylsilylene)(2,1'-dimethylsilylene)bis(3-trimethylsilylmethylindenyl)zirconi um dichloride, (1,2'-dimethylsilylene)(2,1'-dimethylsilylene)bis(3-phenylindenyl)zirconium dichloride, (1,2'-dimethylsilylene)(2,1'-dimethylsilylene)bis(4,5-benzoindenyl)zirconium dichloride, (1,2'-dimethylsilylene)(2,1'-dimethylsilylene)bis(4-isopropylindenyl)zirconium dichloride, (1,2'-dimethylsilylene)(2,1'-dimethylsilylene)bis(5,6-dimethylindenyl)zirconium dichloride, (1,2'-dimethylsilylene)(2,1'-dimethylsilylene)bis(4,7-di-i-propylindenyl)zirconium dichloride, (1,2'-dimethylsilylene)(2,1'-dimethylsilylene)bis(4-phenylindenyl)zirconium dichloride, (1,2'-dimethylsilylene)(2,1'-dimethylsilylene)bis(3-methyl-4-i-propylindenyl)zirconium dichloride, (1,2'-dimethylsilylene)(2,1'-dimethylsilylene)bis(5,6-benzoindenyl)zirconium dichloride, (1,2'-dimethylsilylene)(2,1'-isopropylidene)bis(indenyl)zirconium dichloride, (1,2'-dimethylsilylene)(2,1'-isopropylidene)bis(3-methylindenyl)zirconium dichloride, (1,2'-dimethylsilylene)(2,1'-isopropylidene)bis(3-i-propylindenyl)zirconium dichloride, (1,2'-dimethylsilylene)(2,1'-isopropylidene)bis(3-n-butylindenyl)zirconium dichloride, (1,2'-dimethylsilylene)(2,1'-isopropylidene)bis(3-trimethylsilylmethylindenyl) zirconium dichloride, (1,2'-dimethylsilylene)(2,1'-isopropylidene)bis(3-trimethylsilylindenyl)zirconium dichloride, (1,2'-dimethylsilylene)(2,1'-isopropylidene)bis(3-phenylindenyl)zirconium dichloride, (1,2'-dimethylsilylene)(2,1'-methylene)bis(indenyl)zirconium dichloride, (1,2'-dimethylsilylene)(2,1'-methylene)bis(3-methylindenyl)zirconium dichloride, (1,2'-dimethylsilylene)(2,1'-methylene)bis(3-i-propylindenyl)zirconium dichloride, (1,2'-dimethylsilylene)(2,1'-methylene)bis(3-n-butylindenyl)zirconium dichloride, (1,2'-dimethylsilylene)(2,1'-methylene)bis(3-trimethylsilylmethylindenyl)zirconium dichloride, (1,2'-dimethylsilylene)(2,1'-methylene)bis(3-trimethylsilylindenyl)zirconium dichloride, (1,2'-diphenylsilylene)(2,1'-methylene)bis(indenyl)zirconium dichloride, (1,2'-diphenylsilylene)(2,1'-methylene)bis(3-methylindenyl)zirconium dichloride, (1,2'-diphenylsilylene)(2, 1'-methylene)bis(3-i-propylindenyl)zirconium dichloride, (1,2'-diphenylsilylene)(2,1'-methylene)bis(3-n-butylindenyl)zirconium dichloride, (1,2'-diphenylsilylene)(2,1'-methylene)bis(3-trimethylsilylmethylindenyl)zirconium dichloride, (1,2'-diphenylsilylene)(2,1'-methylene)bis(3-trimethylsilylindenyl)zirconium dichloride, (1,2'-dimethylsilylene)(2,1'-dimethylsilylene)(3-methylcyclopentadienyl) (3'-methylcyclopentadienyl)zirconium dichloride, (1,2'-dimethylsilylene)(2,1'-isopropylidene)(3-methylcyclopentadienyl) (3'-methylcyclopentadienyl)zirconium dichloride, (1,2'-dimethylsilylene)(2,1'-ethylene)(3-methylcyclopentadienyl) (3'-methylcyclopentadienyl)zirconium dichloride, (1,2'-ethylene)(2,1'-methylene)(3-methylcyclopentadienyl)(3'-methylcyclopentadienyl) zirconium dichloride, (1,2'-ethylene)(2,1'-isopropylidene)(3-methylcyclopentadienyl) (3'-methylcyclopentadienyl)zirconium dichloride, (1,2'-methylene)(2,1'-methylene)(3-methylcyclopentadienyl) (3'-methylcyclopentadienyl)zirconium dichloride, (1,2'-methylene)(2,1'-isopropylidene)(3-methylcyclopentadienyl) (3'-methylcyclopentadienyl)zirconium dichloride, (1,2'-isopropylidene)(2,1'-isopropylidene)(3-methylcyclopentadienyl) (3'-methylcyclopentadienyl)zirconium dichloride, (1,2'-dimethylsilylene)(2,1'-dimethylsilylene)(3,4-dimethylcyclopentadienyl) (3',4'-dimethylcyclopentadienyl)zirconiumdichloride, (1,2'-dimethylsilylene)(2,1'-isopropylidene)(3,4-dimethylcyclopentadienyl) (3',4'-dimethylcyclopentadienyl)zirconium dichloride, (1,2'-dimethylsilylene)(2,1'-ethylene)(3,4-dimethylcyclopentadienyl) (3',4'-dimethylcyclopentadienyl)zirconium dichloride, (1,2'-ethylene)(2,1'-methylene)(3,4-dimethylcyclopentadienyl) (3',4'-dimethylcyclopentadienyl)zirconium dichloride, (1,2'-ethylene)(2,1'-isopropylidene)(3,4-dimethylcyclopentadienyl) (3',4'-dimethylcyclopentadienyl)zirconium dichloride, (1,2'-methylene)(2,1'-methylene)(3,4-dimethylcyclopentadienyl) (3',4'-dimethylcyclopentadienyl)zirconium dichloride, (1,2'-methylene)(2,1'-isopropylidene)(3,4-dimethylcyclopentadienyl) (3',4'-dimethylcyclopentadienyl)zirconium dichloride, (1,2'-isopropylidene)(2,1'-isopropylidene)(3,4-dimethylcyclopentadienyl) (3',4'-dimethylcyclopentadienyl)zirconium dichloride, (1,2'-dimethylsilylene)(2,1'-dimethylsilylene)(3-methyl-5-ethylcyclopentadienyl) (3'-methyl-5'-ethylcyclopentadienyl)zirconium dichloride, (1,2'-dimethylsilylene)(2,1'-dimethylsilylene)(3-methyl-5-ethylcyclopentadienyl) (3'-methyl-5'-ethylcyclopentadienyl)zirconium dichloride, (1,2'-dimethylsilylene)(2,1'-dimethylsilylene)(3-methyl-5-isopropylcyclopentadienyl) (3'-methyl-5'-isopropylcyclopentadienyll)zirconium dichloride, (1,2'-dimethylsilylene)(2,1'-dimethylsilylene)(3-methyl-5-n-butylcyclopentadienyl) (3'-methyl-5'-n-butylcyclopentadienyl)zirconium dichloride, (1,2'-dimethylsilylene)(2,1'-dimethylsilylene)(3-methyl-5-phenylcyclopentadienyl) (3'-methyl-5'-phenylcyclopentadienyl)zirconium dichloride, (1,2'-dimethylsilylene)(2,1'-isopropylidene)(3-methyl-5-ethylcyclopentadienyl) (3'-methyl-5'-ethylcyclopentadienyl)zirconium dichloride, (1,2'-dimethylsilylene)(2,1'-isopropylidene)(3-methyl-5-i-propylcyclopentadienyl) (3'-methyl-5'-i-propylcyclopentadienyl)zirconium dichloride, (1,2'-dimethylsilylene)(2,1'-isopropylidene)(3-methyl-5-n-butylcyclopentadienyl) (3'-methyl-5'-n-butylcyclopentadienyl)zirconium dichloride, (1,2'-dimethylsilylene)(2,1'-isopropylidene)(3-methyl-5-phenylcyclopentadienyl) (3'-methyl-5'-phenylcyclopentadienyl)zirconium dichloride, (1,2'-dimethylsilylene)(2, 1'-ethylene)(3-methyl-5-ethylcyclopentadienyl) (3'-methyl-5'-ethylcyclopentadienyl)zirconium dichloride, (1,2'-dimethylsilylene)(2,1'-ethylene)(3-methyl-5-i-propylcyclopentadienyl) (3'-methyl-5'-i-propylcyclopentadienyl)zirconium dichloride, (1,2'-dimethylsilylene)(2,1'-ethylene)(3-methyl-5-n-butylcyclopentadienyl) (3'-methyl-5'-n-butylcyclopentadienyl)zirconium dichloride, (1,2'-dimethylsilylene)(2,1'-ethylene)(3-methyl-5-phenylcyclopentadienyl) (3'-methyl-5'-phenylcyclopentadienyl)zirconiumdichloride, (1,2'-dimethylsilylene)(2,1'-methylene)(3-methyl-5-ethylcyclopentadienyl) (3'-methyl-5'-ethylcyclopentadienyl)zirconium dichloride, (1,2'-dimethylsilylene)(2,1'-methylene)(3-methyl-5-i-propylcyclopentadienyl) (3'-methyl-5'-i-propylcyclopentadienyl)zirconium dichloride, (1,2'-dimethylsilylene)(2,1'-methylene)(3-methyl-5-n-butylcyclopentadienyl) (3'-methyl-5'-n-butylcyclopentadienyl)zirconium dichloride, (1,2'-dimethylsilylene)(2,1'-methylene)(3-methyl-5-phenylcyclopentadienyl) (3'-methyl-5'-phenylcyclopentadienyl)zirconium dichloride, (1,2'-ethylene)(2,1'-methylene)(3-methyl-5-i-propylcyclopentadienyl) (3'-methyl-5'-i-propylcyclopentadienyl)zirconiumdichloride, (1,2'-ethylene)(2,1'-isopropylidene)(3-methyl-5-i-propylcyclopentadienyl) (3'-methyl-5'-i-propylcyclopentadienyl)zirconium dichloride, (1,2'-methylene)(2,1'-methylene)(3-methyl-5-i-propylcyclopentadienyl) (3'-methyl-5'-i-propylcyclopentadienyl)zirconium dichloride, (1,2'-methylene)(2,1'-isopropylidene)(3-methyl-5-i-propylcyclopentadienyl) (3'-methyl-5'-i-propylcyclopentadienyll)zirconium dichloride, (1,1'-dimethylsilylene)(2,2-dimethylsilylene)bis(indenyl)zirconium dichloride, (1,1'-diphenylsilylene)(2,2'-dimethylsilylene)bis(indenyl)zirconium dichloride, (1,1'-dimethylsilylene)(2,2'-dimethylsilylene)bis(indenyl)zirconium dichloride, (1,1-diisopropylsilylene)(2,2-dimethylsilylene)bis(indenyl)zirconium dichloride, (1,1'-dimethylsilylene)(2,2'-diisopropylsilylene)bis(indenyl)zirconium dichloride, (1,1'-dimethylsilyleneindenyl)(2,2'-dimethylsilylene-3-trimethylsilylindenyl)zirconium dichloride, (1,1'-diphenylsilyleneindenyl)(2,2'-diphenylsilylene-3-trimethysilylindenyl)zirconium dichloride, (1,1'-diphenylsilyleneindenyl)(2,2'-dimethylsilylene-3-trimethysilylindenyl)zirconium dichloride, (1,1'-dimethylsilylene)(2,2'-dimethylsilylene)(indenyl)(3-trimethylsilylindenyl)zirconiu m dichloride, (1,1'-diphenylsilylene)(2,2'-diphenylsilylene)(indenyl)(3-trimethylsilylindenyl) zirconium dichloride, (1,1'-diphenylsilylene)(2,2'-dimethylsilylene)(indenyl)(3-trimethylsilylindenyl) zirconium dichloride, (1,1'-dimethylsilylene)(2,2'-diphenylsilylene)(indenyl)(3-trimethylsilylindenyl) zirconium dichloride, (1,1'-diisopropylsilylene)(2,2'-dimethylsilylene)(indenyl)(3-trimethylsilylindenyl) zirconium dichloride, (1,1'-dimethylsilylene)(2,2'-diisopropylsilylene)(indenyl)(3-trimethylsilylindenyl) zirconium dichloride, (1,1'-diisopropylsilylene)(2,2'-diisopropylsilylene)(indenyl)(3-trimethylsilylindenyl) zirconium dichloride, (1,1'-dimethylsilylene)(2,2'-dimethylsilylene)(indenyl)(3-trimethylsilylmethylindenyl) zirconium dichloride, (1,1'-diphenylsilylene)(2,2'-diphenylsilylene)(indenyl)(3-trimethylsilylmethylindenyl) zirconium dichloride, (1,1'-diphenylsilylene)(2,2'-dimethylsilylene)(indenyl)(3-trimethylsilylmethylindenyl) zirconium dichloride, (1,1'-dimethylsilylene)(2,2'-diphenylsilylene)(indenyl)(3-trimethylsilylmethylindenyl) zirconium dichloride, (1,1'-diisopropylsilylene)(2,2'-dimethylsilylene)(indenyl) (3-trimethylsilylmethylindenyl)zirconium dichloride, (1,1'-dimethylsilylene)(2,2'-diisopropylsilylene)(indenyl) (3-trimethylsilylmethylindenyl)zirconium dichloride, (1,1'-diisopropylsilylene)(2,2'-diisopropylsilylene)(indenyl) (3-trimethylsilylmethylindenyl)zirconium dichloride, as well as the compounds replacing zirconium in such compounds with titanium or hafnium.

Analogous compounds of a metal element in other groups or lanthanide group may be also used.

In the above compounds, (1,1'-) and (2,2'-) positions and (1,2'-) and (2,1'-) positions may be replaced with those of (1,2'-) and (2,1'-) and (1,1'-) and (2,2'-) positions, respectively.

Any compound capable of forming an ionic complex by reacting with the transition metal compound of component (A) above may be used as component (B-1) in components (B), but the compounds represented by the following general formula (III) and (IV) are preferably used,

([L¹-R¹⁰]^{k+})a([Z]⁻)_{b} (III)

([L²]^{k+})ₐ([Z]⁻)_{b} (IV)

(in which L² is M², R¹¹R¹²M³, R¹³₃C or R¹⁴M³.)
(in which in formulas (III) and (IV), L¹ represents a Lewis base and [Z]⁻ represents uncoordinated anions [Z¹]⁻ and [Z²]⁻, in which [Z¹]⁻ represents anions of an element linked with a plurality of groups, that is, [M¹G¹G².... G^{f}]⁻, (in which M¹ represents an element in group 5 to 15 in the periodic table, preferably an element in group 13 to 15 in the periodic table. G¹.... G^{f} each represents hydrogen atom, halogen atom, alkyl group having 1 to 20 carbon atoms, dialkylamino group having 2 to 40 carbon atoms, alkoxy group having 1 to 20 carbon atoms, aryl group having 6 to 20 carbon atoms, aryloxy group having 6 to 20 carbon atoms, alkylaryl group having 7 to 40 carbon atoms, arylalkyl group having 7 to 40 carbon atoms, halogen-substituted hydrocarbon group having 1 to 20 carbon atoms, acyloxy group having 1 to 20 carbon atoms, organic metalloids or heteroatom-containing hydrocarbon group having 2 to 20 carbon atoms. Two or more of G¹.... G^{f} may be linked to form a ring. The letter f represents an integer of [(valence of central atom M¹) + 1]) and [Z²]⁻ represents a Broenstead acid by itself with a logarithm of a reciprocal of an acid dissociation constant (pKa) to be -10 or less, a conjugate base of a Broenstead acid and a Lewis acid or a conjugate base of an acid generally defined as a superacid. A Lewis base may be coordinated. Further, R¹⁰ represents hydrogen atom, alkyl group having 1 to 20 carbon atoms, aryl group having 6 to 20 carbon atoms, alkylaryl or arylalkyl and R¹¹ and R¹² each represent cyclopentadienyl, substituted cyclopentadienyl, indenyl or fluorenyl and R¹³ represents alkyl group having 1 to 20 carbon atoms, aryl, alkylaryl or arylalkyl. R¹⁴ represents a macrocyclic ligand such as tetraphenylporphyrin, phthalocyanine. The letter k represents an ion valency of [L¹-R¹⁰] and [L²] with an integer of 1 to 3, a represents an integer of 1 or more and b = (k × a). M² includes an element in group 1 to 3, 11 to 13 and 17 in the periodic table and M³ represents an element in group 7 to 12 in the periodic table).

Specific examples of L¹ include amines such as ammonia, methylamine, aniline, dimethylamine, diethylamine, N-methylaniline, diphenylamine, N,N-dimethylaniline, trimethylamine, triethylamine, tri-n-butylamine, methyldiphenylamine, pyridine, and p-bromo-N,N-dimethylaniline, p-nitro-N,N-dimethylaniline, phosphines such as triethylphosphine, triphenylphosphine, and diphenylphosphine, thioethers such as tetrahydrothiophene, esters such as ethyl benzoate, nitriles such as acetonitrile, and benzonitrile.

Specific examples of R¹⁰ include hydrogen atom, methyl, ethyl, benzyl, trityl, and the like and specific examples of R¹¹ and R¹² include cyclopentadienyl, methylcyclopentadienyl, ethylcyclopentadienyl, pentamethylcyclopentadienyl.

Specific examples of R¹³ include phenyl, p-tolyl, p-methoxyphenyl, and the like and specific examples of R¹⁴ include tetraphenylporphyrin, phthalocyanine, allyl, methallyl.

Further, specific examples of M² include Li, Na, K, Ag, Cu, Br, I, I₃, and the like and specific examples of M³ include Mn, Fe, Co, Ni, Zn.

Further, specific examples of M¹ in [Z¹]⁻, that is, [M¹G¹G².... G^{f}] include B, Al, Si, P, As, Sb, preferably B and Al.
Further, specific examples of G¹, G².... G^{f} include dimethylamino, diethylamino, as a dialkylamino group, methoxy, ethoxy, n-butoxy, phenoxy, as an alkoxy or aryloxy group, methyl, ethyl, n-propyl, isopropyl, n-butyl, isobutyl, n-octyl, n-eicosyl, phenyl, p-tolyl, benzyl, 4-t-butylphenyl, 3,5-dimethylphenyl, as a hydrocarbon group, fluorine, chlorine, bromine or iodine as a halogen atom, p-fluorophenyl, 3,5-difluorophenyl, pentachlorophenyl, 3,4,5-trifluorophenyl, pentafluorophenyl, 3,5-bis(trifluoromethyl)phenyl, bis(trimethylsilyl)methyl,
as a heteroatom-containing hydrocarbon group and pentamethylantimonyl, trimethylsilyl, trimethylgermyl, diphenylarsinyl, dicyclohexylantimonyl, diphenylboronyl, as an organometalloid.

Further, specific examples of uncoordinated anions [Z²]⁻, that is, Broenstead acid by itself with pKa of -10 or less or a conjugate base [Z²]⁻ of a Broenstead acid and a Lewis acid combined include a trifluoromethanesulfonate anion (CF₃SO₃)⁻, a bis(trifluoromethanesulfonyl)methyl anion, a bis(trifluoromethanesulfonyl)benzyl anion, bis(trifluoromethanesulfonyl)amide, a perchlorate anion (ClO₄)⁻, a trifluoroaceate anion (CF₃CO₂)⁻, a hexafluoroantimonate anion (SbF₆)⁻, a fluorosulfonate anion (FSO₃)⁻, a chlorosulfonate anion (ClSO₃)⁻, fluorosulfonate anion/antimony pentafluoride (FSO₃/(SbF₅)⁻, fluorosulfonate anion/arsenic pentafluoride (FSO₃/AsF₅)⁻, trifluoromethane sulfonic acid/antimony pentafluoride (CF₃SO₃/SbF₅).

Specific examples of ionic compounds forming an ionic complex by reacting with the transition metal compounds of component (A) above, that is, compounds of component (B-1) include triethylammonium tetraphenylborate, tri-n-butylammonium tetraphenylborate, trimethylammonium tetraphenylborate, tetraethylammonium tetraphenylborate, methyl(tri-n-butyl)ammonium tetraphenylborate, benzyl(tri-n-butyl)ammonium tetraphenylborate, dimethyldiphenylammonium tetraphenylborate, triphenyl(methyl)ammonium tetraphenylborate, trimethylanilinium tetraphenylborate, methylpyridinium tetraphenylborate, benzylpyridinium tetraphenylborate, methyl(2-cyanopyridinium) tetraphenylborate, triethylammonium tetrakis(pentafluorophenyl)borate, tri-n-butylammonium tetrakis(pentafluorophenyl)borate, triphenylammonium tetrakis(pentafluorophenyl)borate, tetra(n-butyl)ammonium tetrakis(pentafluorophenyl)borate, tetraethylammonium tetrakis(pentafluorophenyl)borate,benzyl(tri-n-butyl)ammonium tetrakis(pentafluorophenyl)borate, methyldiphenylammonium tetrakis(pentafluorophenyl)borate, triphenyl(methyl)ammonium tetrakis(pentafluorophenyl)borate, methylanilinium tetrakis(pentafluorophenyl)borate, dimethylanilinium tetrakis(pentafluorophenyl)borate, trimethylanilinium tetrakis(pentafluorophenyl)borate, methylpyridinium tetrakis(pentafluorophenyl)borate, benzylpyridinium tetrakis(pentafluorophenyl)borate, methyl(2-cyanopyridinium) tetrakis(pentafluorophenyl)borate, benzyl(2-cyanopyridinium) tetrakis(pentafluorophenyl)borate, methyl(4-cyanopyridinium) tetrakis(pentafluorophenyl)borate, triphenylphosphonium tetrakis(pentafluorophenyl)borate, dimethylanilinium tetrakis[bis(3,5-ditrifluoromethyl)phenyl]borate, ferrocenium tetraphenylborate, silver tetraphenylborate, trityl tetraphenylborate, tetraphenylporphyrin manganese tetraphenylborate, ferrocenium tetrakis(pentafluorophenyl)borate, (1,1'-dimethylferrocenium) tetrakis(pentafluorophenyl)borate, decamethylferrocenium tetrakis(pentafluorophenyl)borate, silver tetrakis(pentafluorophenyl)borate, trityl tetrakis(pentafluorophenyl)borate, lithium tetrakis(pentafluorophenyl)borate, sodium tetrakis(pentafluorophenyl)borate, tetraphenylporphyrin manganese tetrakis(pentafluorophenyl)borate, silver tetrafluoroborate, silver hexafluorophosphate, silver hexafluoroarsenate, sliver perchlorate, silver trifluoroaceate, silver trifluoromethanesulfonate.
Components (B-1) may be used in one kind or in a combination of two kinds or more.
On the other hand, aluminoxanes in component (B-2) include a linear aluminoxane represented by the general formula (V),

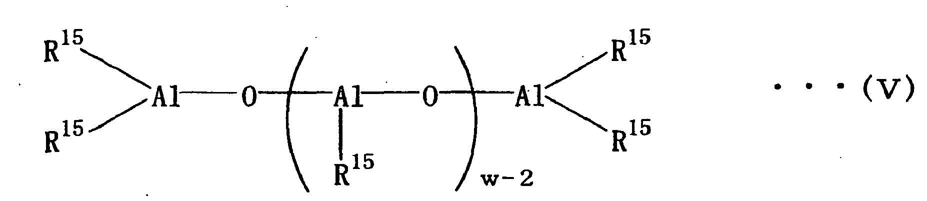

(in which R¹⁵ represents a hydrocarbon group having 1 to 20 carbon atoms, preferably an alkyl group having 1 to 12 carbon atoms, alkenyl, aryl, arylalkyl, or halogen atom and w represents an average degree of polymerization with an integer of generally 2 to 50, preferably 2 to 40. R¹⁵ may be identical or different) and
a cyclic aluminoxane represented by general formula (VI).

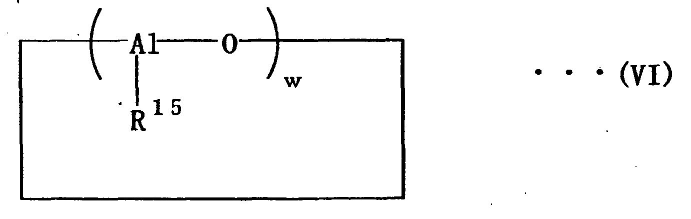

(in which R¹⁵ and w are the same as those in general formula (V) above).

A method for producing the above aluminoxanes includes a method of contacting an alkylaluminum with a condensing agent such as water, but is not particularly limited and reaction may be performed according to a known method.
For example, there are methods of (a) contacting an organoaluminum compound dissolved in advance in an organic solvent with water, (b) adding an organoaluminum compound in an initial phase of polymerization, followed by addition of water, (c) reacting an organoaluminum compounds with crystal water contained in a metal salt or absorbed water in inorganic or organic compounds, (d) reacting a trialkylaluminum with a tetraalkyldialuminoxane, followed by reaction with water.
Here, the aluminoxanes may be insoluble in toluene.
Such aluminoxanes may be used in one kind or two kinds or more combined.

A molar ratio of catalyst component (A) and catalyst component (B) used is preferably in the range of 10:1 to 1:100, and more preferably 2:1 to 1:10. When used in the above range, a catalyst cost per polymer unit mass is not very high and thus practical.
A molar ratio is in the range of preferably 1:1 to 1:1000000, more preferably 1:10 to 1:10000 when compound (B-2) is used.
A catalyst cost per polymer unit mass is not very high and thus practical when used in the above range.
Components (B-1) and (B-2) as catalyst component (B) may be used in one kind or two kinds or more combined.

An organoaluminum compound as component (C) in addition to components (A) and (B) above may be used as a polymerization catalyst for producing α-olefin polymers in the present invention.
Compounds represented by the general formula (VII) may be used as an organoaluminum compound of component (C),

R¹⁶ᵥAlJ₃₋ᵥ (VII),

(in which R¹⁶ represents alkyl group having 1 to 10 carbon atoms, J represents hydrogen atom, alkoxy group having 1 to 20 carbon atoms, aryl group having 6 to 20 carbon atoms or halogen atom, and v is an integer of 1 to 3).
Specific examples of the compound represented by the general formula (VII) above include trimethylaluminum, triethylaluminum, triisopropylaluminum, triisobutylaluminum, dimethylaluminum chloride, diethylaluminum chloride, methylaluminum dichloride, ethylaluminum dichloride, dimethylaluminum fluoride, diisobutylaluminum hydride, diethylaluminum hydride, ethylaluminum sesquichloride.
Such organoaluminum compounds may be used in one kind or two kinds or more combined.

A molar ratio of catalyst component (A) to catalyst component (C) used is in the range of preferably 1:1 to 1:10000, more preferably 1:5 to 1:2000, and further more preferably 1:10 to 1:1000.
Use of the catalyst component (C) improves polymerization activity per unit transition metal, but excess use is not preferred because of wasting the organoaluminum compound and a large quantity thereof left in polymers.
At least one kind of the catalyst component is supported on an appropriate carrier in producing the α-olefin polymer in the present invention.
Kinds of the carrier are not particularly limited and any one of inorganic oxide carriers, other inorganic carriers and organic carriers may be used, but inorganic oxide carriers or other inorganic carriers are preferred.

A polymerization method is not particularly limited in producing the α-olefin polymer in the present invention and any method of slurry polymerization, vapor phase polymerization, bulk polymerization, solution polymerization, suspension polymerization, and the like may be used, but slurry polymerization and vapor phase polymerization methods are particularly preferred.
Concerning polymerization conditions, polymerization temperature is in the range of generally -100 to 250°C, preferably -50 to 200°C, and more preferably 0 to 130°C.
Polymerization time is generally 5 minutes to 10 hours and polymerization pressure is preferably atmospheric pressure to 20 MPa (gauge), and more preferably atmospheric pressure to 10 MPa (gauge).

Addition of hydrogen is preferred in producing the α-olefin polymer in the present invention because polymerization activity is improved.
Pressure is generally atmospheric pressure to 5MPa (gauge), preferably atmospheric pressure to 3MPa (gauge), and further more preferably atmospheric pressure to 2MPa (gauge), when hydrogen is used.
When polymerization solvents are used, for example, aromatic hydrocarbons such as benzene, toluene, xylene, ethylbenzene, and the like, alicyclic hydrocarbons such as cyclopentane, cyclohexane, methylcyclohexane, and the like, aliphatic hydrocarbons such as pentane, hexane, heptane, octane, and the like and halogenated hydrocarbons such as chloroform, dichloromethane, may be used.
Such solvents may be used in one kind or two kinds or more combined. Monomers such as α-olefin may be used as a solvent.
A solvent-free polymerization may be used depending on a polymerization method.

The polymerization catalysts mentioned above may be used to carry out prepolymerization in polymerization.
The prepolymerization may be carried out, for example, by contacting a small amount of an olefin with the solid catalyst component, but the method thereof is not particularly limited and a known method may be used.
The olefin used in the prepolymerization is not particularly limited and includes similar ones illustrated above, for example, an olefin having 3 to 20 carbon atoms or a mixture thereof, but use of the same olefin as those used in the present polymerization is advantageous.

Prepolymerization temperature is in the range of generally -20 to 200°C, preferably -10 to 130°C, and more preferably 0 to 80°C.
Aliphatic hydrocarbons, aromatic hydrocarbons, monomers, and the like may be used as a solvent in the prepolymerization.
Among them aliphatic hydrocarbons are particularly preferred
.Prepolymerization may also be carried out without a solvent.
Prepolymerization conditions are preferably adjusted such that the intrinsic viscosity [η] of prepolymerization products (measured in decalin at 135°C) is 0.1 dL/g or more and an amount of the prepolymerization products is in the range of 1 to 10000g, and particularly 10 to 1000 g per 1 mmol of the transition metal component in the catalyst.
A method to regulate the molecular weight of the polymer includes selection of kind and the amount of each catalyst component and the polymerization temperature as well as copolymerization in the presence of hydrogen. An inert gas such as nitrogen, and the like may be present.
As stated above, by using a specific catalyst, crystallinity (stereo-regularity) of the polyolefin is regulated, and a polyolefin having a homogeneous composition and high flowability can be produced.

The α-olefin polymer in the present invention obeys the following requirements (1) to (3):
(1) A mesopentad fraction (mmmm) is in the range of 20 to 75 mol % or a stereo-regularity index ([M4]) is in the range of 75 mol % or less;
(2) A molecular weight distribution converted to polystyrene equivalent determined by a gel permeation chromatography (GPC) method is 3.0 or less; and
(3) An intrinsic viscosity [η] determined in a tetralin solvent at 135°C is in the range of 0.01 to 5.0 dL/g.

In the present invention the mesopentad fraction (mmmm) (1) is evaluated according to a method proposed and reported by A. Zambelli, et al. in Macromolecules, 6,6925 (1973).
That is, a ¹³C nuclear magnetic resonance spectrum is used to determine signals of the methylene and methine groups to calculate the mesopentad fraction (mmmm) in poly(propylene)molecule. Larger number of this fraction means higher stereoregularity.
Measurement of ¹³C nuclear magnetic resonance spectra is carried out by an apparatus and conditions below.
Apparatus: JOEL Model JNM-EX400 ¹³C nuclear magnetic resonance spectrometer
Method: Complete proton decoupling method
Concentration: 220 mg/mL
Solvent: Mixed solvent of 1,2,4-trichlorobenzene and deuterobenzene in a 90:10 ratio by volume
Temperature: 130°C
Pulse width: 45°C
Pulse repetition time: 4 seconds
Integration: 10000 times

The stereo-regularity index ([M4]) in the present invention is a value of the mesotriad fraction of α-olefin chain ([M4]) determined by measuring ¹³C nuclear magnetic resonance spectra similarly to the above conditions using a JOEL Model JNM-EX400 instrument.
This means that the larger the stereo-regularity index ([M4]) is, the higher the stereo-regularity is.
The stereo-regularity index ([M4]) of the α-olefin polymer in the present invention is 75 mol % or less, preferably 10 to 70 mol %, and more preferably 20 to 65 mol %.
Polymers may have stickiness when the stereo-regularity index ([M4]) is below 20 mol %, whereas they may cause lowering secondary processability when exceeding 75 mol %.
The mesopentad fraction (mmmm) of the α-olefin polymer in the present invention is 20 to 75 %, preferably 30 to 60 %, and more preferably 40 to 55 %.

A molecular weight distribution (Mw/Mn) of the α-olefin polymer in the present invention converted to polystyrene equivalent determined by a gel permeation chromatography (GPC) method (2) is 3.0 or less, and preferably 2.5 or less. Stickiness may occur when a molecular weight distribution (Mw/Mn) exceeds 3.0.
Mw/Mn above is a value calculated from a weight average molecular weight Mw and a number average molecular weight Mn measured by a GPC method using an instrument and conditions below.
GPC measurement instrument
Column: TOSO GMHHR-H(S)HT
Detector: Refractive index (RI) detector for liquid chromatography WATERS Model 150C
Measurement conditions
Solvent: 1,2,4-Trichlorobenzene
Measurement temperature: 145°C
Flow rate: 1.0 mL/min
Sample concentration: 2.2 mg/mL
Injection volume: 160 µL
Calibration curve: Universal calibration
Analysis program: HT-GPC (Ver. 1.0)

An intrinsic viscosity [η] of the α-olefin polymer in the present invention determined in a tetralin solvent at 135°C (3) is 0.01 to 5.0 dL/g, preferably 0.1 to 5.0 dL/g, and particularly preferably 0.2 to 3.0 dL/g.
Sufficient adhesion strength may not be obtained when the intrinsic viscosity [η] is below 0.01 dL/g. Coating performance and applicability may be poor because of lower flowability when exceeding 5.0 dL/g.

Furthermore, the α-olefin polymer in the present invention is a crystalline resin with a melting point (Tm) of preferably 0 to 120°C, and more preferably 0-100°C, defined as the temperature at the top of the peak observed in the highest temperature side in a melting endothermic curve, which is obtained by holding a sample at -10°C for 5 minutes under nitrogen atmosphere and then elevating the temperature at a rate of 10°C /minute using a differential scanning calorimeter (DSC) (4).
The crystalline resin in the present invention means a resin for which the above Tm is observed.

### (ii) Radical initiator

A radical initiator used in the α-olefin polymer in the present invention is not particularly limited, but conventionally known radical initiators, for example, various organic peroxides and azo compounds such as azobisisobutyronitrile, azobisisovaleronitrile may be appropriately selected to use and among them organic peroxides are preferred.
Organic peroxides used as the radical initiator includes, for example, diacyl peroxides such as dibenzoyl peroxide, di-3,5,5-trimethylhexanoyl peroxide, dilauroyl peroxide, didecanoyl peroxide, di(2,4-dichlorobenzoyl) peroxide, hydroperoxides such as t-butylhydroperoxide, cumenehydroperoxide, diisopropylbenzenehydroperoxide, 2,5-dimethylhexane-2,5-dihydroperoxide, dialkyl peroxides such as di-t-butyl peroxide, dicumyl peroxide, 2,5-dimethyl-2,5-di(t-butylperoxy)hexane, 2,5-dimethyl-2,5-di(t-butylperoxy)hexyne-3, α, α'-bis(t-butylperoxy)diisopropylbenzene, peroxy ketals such as 1,1-bis(t-butylperoxy)3,3,5-trimethylcyclohexane, 2,2-bis(t-butylperoxy)butane, alkyl peresters such as t-butyl peroxyoctoate, t-butyl peroxypivalate, t-butyl peroxyneodecanoate, t-butyl peroxybenzoate, peroxycarbonates such as di-2-ethylhexyl peroxydicarbonate, diisopropyl peroxydicarbonate, di-sec-butyl peroxydicarbonate, t-butylperoxy isopropyl carbonate. Among them dialkyl peroxides are preferred. These may be used in one kind singly or two kinds or more combined.
The amount of the radical initiator used is not particularly limited, but appropriately selected to match desired properties of the modified α-olefin polymer as a target and in a range of generally 0.01 to 10 parts by mass, and preferably 0.01 to 5 parts by mass relative to 100 parts by mass of the α-olefin polymer used.

### (iii) Monomer with a silane group and an ethylenic unsaturated group or silane coupling agent

"Monomers with the silane group and the ethylenic unsaturated group" reacting with the α-olefin polymer in the present invention can be represented by the general formula RR'SiY.
R in said formula is an aliphatically unsaturated hydrocarbon group, which is reactive with free radical sites generated in the α-olefin polymers. Examples of such groups include vinyl, allyl, butenyl, cyclohexenyl, cyclopentadienyl and (meth)acryloxypropyl, and vinyl, methacryloxy and acryloxy groups are preferred.
Y in the formula is any hydrolyzable organic groups such as alkoxy groups, for example, methoxy, ethoxy and butoxy, acyloxy groups, for example, formyloxy, acetoxy or propionyloxy, oxime groups, and substituted amino groups, for example, alkylamino or arylamino.
R' in the formula may be group R or group Y
Further, silane coupling agents generally have a general formula of Y'~CH₂SiX'₃. X' is a hydrolysable substituent such as alkoxy or halogens to react with an inorganic substance, whereas Y' is a vinyl, epoxy or amino group readily reactive with organic substances.
In the present invention, monomers with alkoxysilane group as a hydrolyzable organic group are preferred among such silane monomers, particularly those with three alkoxysilane groups are preferred and most preferred silane monomers include vinyltriethoxysilane, vinyltrimethoxysilane, methacryloxypropyltrimethoxysilane and methacryloxypropyltriethoxysilane.
The ratio of the silane monomers used depends in part on reaction conditions. An actual ratio widely varies, for example, from 0.1 to 50% by mass relative to the mass of the α-olefin polymer. However, use of 0.5 to 10% by mass of them relative to the mass of the α-olefin polymer is generally preferred.

### (Modified α-olefin polymers)

A method for producing the modified α-olefin polymer is not particularly limited, but allows use of, for example, a method to melt and knead the α-olefin polymer with the above radical initiator and silane monomer at 100 to 300°C to react using a roll mill, Banbury mixer or extruder or a method to react by solution modification in a temperature range of -50 to 300°C in an appropriate solvent such as hydrocarbon solvents including butane, pentane, hexane, heptane, cyclohexane, toluene, xylene, decahydronaphthalene, halogenated hydrocarbon solvents including chlorobenzene, dichlorobenzene, trichlorobenzene, or a liquefied α-olefin.

The modified α-olefin polymer in the present invention preferably satisfies (1) to (4) below:
(1) The mesopentad fraction (mmmm) is in the range of 25 to 75 mol % or the stereo-regularity index ([M4]) is 75 mol % or less;
(2) The weight average molecular weight (Mw) and the molecular weight distribution (Mw/Mn) converted to polystyrene equivalent determined by a GPC method are in the range of 1,000 to 10,000,000 and 1.5 or more, respectively;
(3) The content of the component derived from the monomer with the silane group and the ethylenic unsaturated group is 0.1 to 50 mol %; and
(4) The melting point is in the range of 40 to 100°C.

The metapentad fraction (mmmm) and the stereo-regularity index ([M4]) (1) above are similar to those described in (1) in (i) α-olefin polymers.
A measurement method of a weight average molecular weight (Mw) and a molecular weight distribution (Mw/Mn) converted to polystyrene equivalent determined by a GPC method (2) above is similar to those described in (1) in (i) the α-olefin polymer.
The molecular weight distribution (Mw/Mn) determined by a GPC method is preferably 1.5 or higher, and more preferably 1.5 to 3.0. By keeping the molecular weight distribution (Mw/Mn) at 1.5 or higher, moldability is improved because of uniform polymer chain length, while stickiness may occur when the value of Mw/Mn exceeds 3.0.
The weight average molecular weight (Mw) determined by a GPC method is in the range of preferably 1,000 to 10,000,000, and more preferably 2,000 to 1,000,000. The polymers have little stickiness and an appropriate flowability with good moldability, when Mw is in the range of 1,000 to 10,000,000.

The content of the component derived from the monomer with the silane group and the ethylenic unsaturated group in the modified α-olefin polymer in the present invention is in the range of preferably 0.01 to 50 mol %, more preferably 0.05 to 40 mol %, and furthermore preferably 0.1 to 30 mol %. Keeping the content of the component at 0.01 mol % or more realizes sufficient cross-linking capability. Also, keeping it at 50 mol % or less does not impair adhesiveness.
The melting point (Tm) of the modified α-olefin polymer in the present invention is in the range of preferably 40 to 100°C, and more preferably 50 to 90°C. Keeping the melting point of the modified α-olefin polymer in the present invention at 40°C improves handleability and workability at room temperature. Keeping it at 100°C or less improves application properties at low temperature.

Production of a cross-linked product of the modified α-olefin polymer in the present invention can be performed by contacting and heating the modified α-olefin polymer with moisture or damp in the presence or absence of a silanol condensation catalyst. Contact of the modified α-olefin polymer with moisture or damp may involve, for example, leaving the modified α-olefin polymer in air or immersing it in a water bath, into which steam is introduced. The temperature may be at room temperature, but higher temperature is preferred because of shorter time for cross-linking. Furthermore, a cross-linking time can be shortened when performed under vacuum.
The silanol condensation catalyst is preferably used by adding and mixing with the modified α-olefin polymer. An addition method preferably involves preliminary preparation of a catalyst master batch containing a high concentration of the silanol condensation catalyst, which is then blended with the modified α-olefin polymer for kneading or melting.
The silanol condensation catalyst includes organic tin metal compounds such as dibutyltin dilaurate, dibutyltin diacetate, dibutyltin dioctate, organic bases such as ethylamine and organic acids such as fatty acids, and dibutyltin dialurate, dibutyltin diacetate, and dibutyltin dioctate are particularly preferred. Their added amount is in the range of 0.005 to 2.0% by mass, and preferably 0.01 to 0.5% by mass relative to the modified α-olefin polymer.

The modified α-olefin polymer in the present invention is suitably used for (reactive) hot melt agents, intermediate films for glass (for safety glass, and the like), adhesives for glass, sealants, modifiers for resin and elastomer, wax blending agents and filler blending agents. In addition to these applications, it is used as resin modifiers, paint components, ink components, adhesive components, primer components, lubricating oil components, heat storage components, high performance waxes, cement components, medical equipments, films, sheets, release films, caulking materials, cable sheaths, electric wire clads, insulation materials, pipes, heat shrink tapes, dispersants.

### Example

The present invention is next further detailed with reference to Examples, but not limited by these Examples in any way. A method to evaluate the characteristics and physical properties of the α-olefin polymer obtained in Production Examples and the modified α-olefin polymer obtained in Examples is first described.
(1) Measurement of the mesopentad fraction (mmmm) and the stereo-regularity index ([M4]).
   Measurement was performed according to the method described in the specification.
(2) Measurement of the intrinsic viscosity [η]
   Measurement was performed by using an automatic viscometer Model VMR-053 from RIGO Co., Ltd. in a tetralin solvent at 135°C.
(3) Measurement of the weight average molecular weight (Mw) and the molecular weight distribution (Mw/Mn)
   Measurement was performed according to the method described in the specification.
(4) Measurement of DSC (determination of the melting point, Tm)
   A differential scanning calorimeter (Perkin Elmer Model DSC-7) was used to determine the melting point (Tm) by measuring the temperature at the top of the peak observed in the highest temperature side in a melting endothermic curve (ΔH), which was obtained by holding 10 mg of a sample at -10°C for 5 minutes under nitrogen atmosphere, lowering temperature at a rate of 5°C /minute up to -10°C and then elevating a temperature at a rate of 10°C/minute.

Further, in the adhesion test, samples of the silane-modified materials synthesized in Examples and the silane-modified materials used in Comparative Examples were used and evaluated as follows.
Base materials: (1) glass plate-glass plate, (2) glass plate-PP (polypropylene) sheet and (3) PP sheet-PP sheet
Test method: A sample of the silane-modified material was sandwiched between two glass plates (1 cm in width, 5 cm in length and 1 mm in thickness), which were pressure-bonded by a press machine under the conditions of 100°C, 60 seconds and 1 kg/cm². The test sample was in turn cooled and a peeling test was carried out after one day.
Evaluation method: In the peeling test, the tested sample was rated O when peeling was not possible, and × when peeling was possible because of poor adhesion.

Production Example 1: Synthesis of
(1,2'-dimethylsilylene)(2,1'-dimethylsilylene)bis(3-trimethylsilylmethylindenyl) zirconium dichloride
To a 200 mL Schrenk tube were charged 2.5 g (7.2 mmol) of (1,2'-dimethylsilylene)(2,1'-dimethylsilylene)bis(indene) and 100 mL of ether under nitrogen stream.
The resultant solution was chilled to -78°C, to which 9.0 mL (14.8 mmol) of a hexane solution of n-butyllithium (n-BuLi) (1.6 mol/L) was added, and the resultant mixture was stirred at room temperature for 12 hours.
After the solvent was distilled off, solid substance obtained was washed with 20 mL of hexane and dried under vacuum to quantitatively yield a lithium salt as a while solid.
The lithium salt of (1,2'-dimethylsilyiene)(2,1'-dimethyisilylene)bis(indene) (6.97 mmol) was dissolved in 50 mL of THF (tetrahydrofuran) in a Schrenk tube, to which 2.1 mL (14.2 mmol) of iodomethyltrimethylsilane was gradually added at room temperature, and the resultant mixture was stirred for 12 hours.
After the solvent was distilled off, 50 mL of ether was added to the residue, which was washed with a saturated ammonium chloride aqueous solution.
After phase separation, the organic phase was dried and the solvent was removed to yield 3.04 g (5.9 mmol) of (1,2'-dimethylsilylene)(2,1'-dimethylsilylene) bis(3-trimethylsilylmethylindene) (yield = 84%).

Next, to the Schrenk tube were charged 3.04 g (5.9 mmol) of (1,2'-dimethylsilylene)(2,1'-dimethylsilylene)bis(3-trimethylsilylmethylindene) obtained above and 50 mL of ether under nitrogen steam. The resultant mixture was chilled to -78°C, to which 7.4 mL (11.8 mmol) of a hexane solution of n-butyllithium (n-BuLi) (1.6 mol/L) was added and the resultant solution was stirred at room temperature for 12 hours.
After the solvent was distilled off, solid substance obtained was washed with 40 mL of hexane to yield 3.06 g of a lithium salt as an ether adduct.
A ¹H-NMR spectrum of this product was measured and the following results were obtained.
¹H-NMR (90 MHz, THF-d₈): δ 0.04 (s, -SiMe₃, 18H), 0.48 (s, -Me₂Si-, 12H), 1.10 (t, -CH₃, 6H), 2.59 (s, -CH₂-, 4H), 3.38 (q, -CH₂-, 4H), 6.2-7.7 (m, Ar-H, 8H)
Under nitrogen stream, 3.06 g of the lithium salt obtained above was suspended in 50 mL of toluene. This mixture was chilled to -78°C, to which 1.2 g (5.1 mmol) of zirconium tetrachloride suspended in toluene (20 mL) chilled to -78°C in advance was added dropwise. After dropwise addition, the resulting mixture was stirred at room temperature for 6 hours. After the solvent of this reaction solution was evaporated, a residue obtained was recrystallized from dichloromethane to yield 0.9 g (1.33 mmol) of (1,2'-dimethylsilylene)(2,1'-dimethylsilylene)bis(3-trimethylsilylmethylindenyl) zirconium dichloride as fine crystals in yellow color (yield = 26%).
A ¹H-NMR spectrum of this product was measured and the following results were obtained.
¹H-NMR (90 MHz, CDCl₃): δ 0.0 (s, -SiMe₃-, 18H), 1.02, 1.12 (s, -Me₂Si-, 12H), 2.51 (dd, -CH₂-, 4H), 7.1-7.6 (m, Ar-H, 8H)

### Production Method 2: Synthesis of propylene (C3) polymer

To a heat-dried 1-liter autoclave were charged 400 mL of heptane, 0.5 mmol of triisobutylaluminum, 0.2 µmol of (1,2'-dimethylsilylene)(2,1'-dimethylsilylene) bis(3-trimethylsilylmethylindenyl) zirconium dichloride obtained in Production Example 1 and 0.8 µmol of dimethylanilinium tetrakis(pentafluorophenyl)borate. Then hydrogen and propylene were introduced to the autoclave at 0.2 MPa and 0.6 MPa, respectively, to adjust a total pressure of 0.8 MPa, and polymerization was performed at 70°C for 60 minutes. After completion of the polymerization, the reaction mixture was dried under vacuum to yield 110 g of a propylene polymer.

The propylene polymer obtained had an intrinsic viscosity [η] of 0.32 dL/g, a weight average molecular weight (Mw) of 32,000 and a molecular weight distribution (Mw/Mn) of 1.8 converted to polystyrene equivalent determined by a GPC method, stereo-regularity (mesopentad fraction: mmmm) of 43 mol % and a melting point (Tm) of 86°C determined by DSC measurement.

### Production Method 3: Synthesis of butene (C₄) polymer

To a heat-dried 1-liter autoclave were charged 200 mL of heptane, 200 mL of butene-1, 0.5 mmol of triisobutylaluminum, 0.2 µmol of (1,2'-dimethylsilylene)(2,1'-dimethylsilylene)bis(3-trimethylsilylmethylindenyl) zirconium dichloride obtained in Production Example 1 and 0.8 mmol of dimethylanilinium tetrakis(pentafluorophenyl)borate. Hydrogen was introduced to the autoclave at 0.3 MPa and polymerization was performed at 70°C for 60 minutes. After completion of the polymerization, the reaction mixture was dried under vacuum to yield 84 g of a butene polymer.
The butene polymer obtained had an intrinsic viscosity [η] of 0.39 dL/g, a weight average molecular weight (Mw) of 67,000 and a molecular weight distribution (Mw/Mn) of 1.8, stereo-regularity (mesopentad fraction: mmmm) of 70.5 mol % and a melting point (Tm) of 72.3°C.

### Production Example 4: Synthesis of C18 polymer

To a heat-dried 1-liter autoclave were charged 400 mL of Linealene 18 from Idemitsu Kosan Co., Ltd., 0.5 mmol of triisobutylaluminum, 1 µmol of (1,2'-dimethylsilylene)(2,1'-dimethylsilylene)bis(3-trimethylsilylmethylindenyl) zirconium dichloride obtained in Production Example 1 and 4 µmol of dimethylanilinium tetrakis(pentafluorophenyl)borate. Hydrogen was introduced to the autoclave at 0.03 MPa and polymerization was performed at 75°C for 240 minutes. After completion of the polymerization, the reaction mixture was poured into acetone to precipitate solids, and the resultant mixture was heated under vacuum to dry to yield 250 g of a higher α-olefin (C 18) polymer.
The higher α-olefin (C 18) polymer obtained had an intrinsic viscosity [η] of 0.33 dL/g, a weight average molecular weight (Mw) of 93,000 and a molecular weight distribution (Mw/Mn) of 1.7, a melting point (Tm) of 42°C, a melting endothermicity value (ΔH) of 82 J/g and a stereo-regularity index ([M4]) of 28 mol %.

### Example 1

### (Modification of propylene polymer with silane)

To a 1000-mL three-neck separable flask equipped with a stirring blade were charged 30 g of the propylene polymer obtained in Production Example 2 and 250 mL of toluene. The flask was heated to 110°C, to which 0.2 g of di-t-butyl peroxide and 5 g of methacryloxypropyltrimethoxysilane were added dropwise over one hour. After completion of the dropwise addition, the mixture was stirred at 110°C for about 240 minutes and then poured into in a beaker for washing and reprecipitation with methanol to yield 28.5 g of a silane-modified propylene polymer.
The silane-modified propylene polymer obtained had an intrinsic viscosity [η] of 0.29 dL/g, a weight average molecular weight (Mw) of 33,000, a molecular weight distribution (Mw/Mn) of 1.68, a melting point (Tm) of 74.4°C, a melting endothermicity value (ΔH) of 15.6 J/g, stereo-regularity (mmmm) of 44.3 mol % and a content of the component derived from the silane monomer of 0.04 mol %.

### (Adhesion test)

An adhesion test was carried out at 100°C and 80°C using (1) glass plate-glass plate, (2) glass plate-PP (polypropylene) sheet and (3) PP sheet-PP sheet as base materials and the silane-modified propylene polymer as an adhesive. The results are shown in Table 1.

### (Cross-linking reaction of silane-modified propylene polymer)

To a 100-mL flask were charged 5 g of the silane-modified propylene polymer obtained above and 20 mL of toluene for dissolving at room temperature. After dissolution, 0.5 mL of water and 0.3 mL of dibutyltin octoate were added dropwise to the solution, and the resultant solution was stirred in a hot-water bath at 50°C for 3 hours. After completion of the reaction, the reaction mixture was dried under vacuum to yield 4.8 g of a cross-linked product of the silane-modified propylene polymer.
An intrinsic viscosity [η] of the cross-linked product of silane-modified propylene polymer was increased to 0.54 dL/g, indicating progress of the crosslinking reaction.

### Example 2

### (Modification of butene polymer with silane)

To a 1000 mL three-neck separable flask equipped with a stirring blade were charged 60 g of the butene polymer obtained in Production Example 3 and 250 mL of toluene. The flask was heated to 110°C, to which 0.2 g of di-t-butyl peroxide and 5 g of methacryloxypropyltrimethoxysilane were then added dropwise over one hour.
After completion of the dropwise addition, the mixture was stirred at 110°C for about 240 minutes and then poured into in a beaker for washing and reprecipitation with methanol to yield 57.6 g of a silane-modified butene polymer.
The silane-modified butene polymer obtained had an intrinsic viscosity [η] of 0.35 dL/g, a weight average molecular weight (Mw) of 76,000, a molecular weight distribution (Mw/Mn) of 1.70, a melting point (Tm) and a melting endothermicity value (ΔH) being undetectable, stereo-regularity (mmmm) of 71.0 mol % and a content of the component derived from the silane monomer of 0.2 mol %.

### (Adhesion test)

An adhesion test of the silane-modified butene polymer obtained was carried out at 100°C and 80°C similarly to Example 1. The results are shown in Table 1.

### (Cross-linking reaction of silane-modified butene polymer).

To a 100 mL flask were charged 5 g of the silane-modified butene polymer obtained as above and 20 mL of toluene for dissolving at room temperature. After dissolution, 0.5 mL of water and 0.3 mL of dibutyltin octoate were added dropwise to the solution, and the resultant solution was stirred in a hot-water bath at 50°C for 3 hours. After completion of the reaction, the reaction mixture was dried under vacuum to yield 4.5 g of a cross-linked product of the silane-modified butene polymer.
An intrinsic viscosity [η] of the cross-linked product of silane-modified butene polymer obtained was not measured because of insolubility and the product was not soluble in a solvent such as toluene, and heptane.

### Example 3

### Modification of octadecene (C₁₈) polymer with silane

To a 1000-mL three-neck separable flask equipped with a stirring blade were charged 60 g of the octadecene polymer obtained in Production Example 4 and 250 mL of toluene. The flask was heated to 110°C, to which 0.2 g of di-t-butyl peroxide and 5 g of methacryloxypropyltrimethoxysilane were then added dropwise over one hour.
After completion of the dropwise addition, the mixture was stirred at 110°C for about 240 minutes and then poured into in a beaker for washing and reprecipitation with methanol to yield 51 g of a silane-modified octadecene polymer.
The silane-modified octadecene polymer obtained had an intrinsic viscosity [η] of 0.26 dL/g, a weight average molecular weight (Mw) of 107,000, a molecular weight distribution (Mw/Mn) of 1.70, a melting point (Tm) of 40.8°C, a melting endothermicity value (ΔH) of 85J/g, a stereo-regularity index ([M4]) of 28.3 mol % and a content of the component derived from the silane monomer of 0.7 mol %.

### Adhesion test

An adhesion test of the silane-modified octadecene polymer obtained was carried out at 100°C, 80°C and 40°C similarly to Example 1. The results are shown in Table 1.

### (Cross-linking reaction of silane-modified octadecene polymer)

To a 100-mL flask were charged 5 g of the silane-modified octadecene polymer above and 20 mL of toluene for dissolving at room temperature. After dissolution, 0.5 mL of water and 0.3 mL of dibutyltin octoate were added dropwise to the solution, and the resultant solution was stirred in a hot-water bath at 50°C for 3 hours. After completion of the reaction, the reaction mixture was dried under vacuum to yield 4.5 g of a cross-linked product of the silane-modified octadecene polymer.
An intrinsic viscosity [η] of the cross-linked product of silane-modified octadecene polymer was increased to 0.67 dL/g, indicating progress of the cross-linking reaction.

### Comparative Example 1

### (Adhesion test)

An adhesion test of a silane-modified propylene polymer (LINKLON XPM800HM from Mitsubishi Chemical Corp.) was carried out at 100°C, 80°C and 40°C similarly to Example 1. The results are shown in Table 1. The silane-modified propylene polymer used neither melted at each temperature nor adhered because of high melting point.

### (Cross-linking reaction of silane-modified propylene polymer)

To a 100 mL flask were charged 5 g of the silane-modified propylene polymer (LINKLON XPM800HM from Mitsubishi Chemical Corp., [η]; 1.36 dL/g) and 20 mL of p-xylene, and the resultant mixture was stirred at 100°C. To the slurry were added 0.5 mL of water and 0.3 mL of dibutyltin octoate dropwise, and the resultant mixture was stirred in an oil bath at 100°C for 3 hours. After completion of the stirring, the reaction mixture was dried under vacuum to yield 4.5 g of a cross-linked product of the silane-modified propylene polymer.
An intrinsic viscosity [η] of the reaction product of the silane-modified propylene polymer was 1.36 dL/g. The reaction product of the silane-modified propylene polymer was not soluble at 100°C and the cross-linking reaction did not proceed.

### Comparative Example 2

### (Adhesion test of silane-modified EVA)

An adhesion test of a silane-modified EVA (LINKLON XVN600F from Mitsubishi Chemical Corp.) was carried out at 100°C, 80°C and 40°C similarly to Example 1. The results are shown in Table 1. The silane-modified EVA used neither melted at each temperature nor adhered because of high melting point.

**Table 1**

| | | Example 1 | Example 2 | Example 3 | Comparative Example1 | Comparative Example 2 |
|---|---|---|---|---|---|---|
| Base resin | | Silane-modified C₃ polymer | Silane-modified C₄ polymer | Silane-modified C₁₈ polymer | Silane-modified PP | Silane-modified EVA |
| Production of α-olefin polymer | | Production Example 2 | Production Example 3 | Production Example 4 | | |
| Catalyst | Main complex | Doubly cross-linked complex | Doubly cross-linked complex | Doubly cross-linked complex | | |
| | Promoter | Anilinium borate | Anilinium borate | Anilinium borate | | |
| Polymerization condition | Temperature (°C) | 70 | 70 | 75 | | |
| | Hydrogen pressure (MPa) | 0.2 | 0.3 | 0.03 | | |
| | Time (hour) | 1 | 1 | 4 | | |
| | Monomer | Propylene | Butene | Octadecene | | |
| Physical properties of polymer | [η] (dL/g) | 0.32 | 0.39 | 0.33 | | |
| | Mw | 32000 | 67000 | 93000 | | |
| | Mw/Mn | | | | | |
| | Tm (°C) | 1.8 86.0 | 1.8 72.3 | 1.7 42.0 | | |
| | Stereoregulariy (mol %) | | | | | |
| | mmmm | 43.0 | 70.5 | | | |
| | [M4] | | | 28.0 | | |
| Physical properties of modified product | [η] (dL/g) | 0.29 | 0.35 | 0.26 | 1.36 | 0.86 |
| | Mw | 33000 | 76000 | 107000 | 310000 | 136000 |
| | Mw/Mn | 1.68 | 1.70 | 1.70 | 3.10 | 3.15 |
| | Tm (°C) | 74.4 | undetectable | 40.8 | 160.4 | 88.0 |
| | Stereoregularity (mol %) | | | | | |
| | mmmm | 44.3 | 71.0 | | | - |
| | [M4] | | | 28.3 | | |
| | Silane content (mol %> | 0.04 | 0.2 | 0.7 | 0.4 | 0.3 |
| Adhesion test of modified product | | | | | | |
| Temperature | Base material | | | | | |
| 100°C | Glass plate-glass plate | ○ | O | O | × | O |
| 100°C | Glass plate-PP sheet | O | O | O | × | × |
| 100°C | PP sheet-PP sheet | O | O | O | × | × |
| 80°C | Glass plate-glass | O | O | O | × | × |
| 80°C | plate Glass plate-PP sheet | O | O | O | × | × |
| 80°C | PP sheet-PP sheet | O | O | O | × | × |
| 40°C | Glass plate-glass plate | | | O | × | × |
| 40°C | Glass plate-PP sheet | | | O | × | × |
| 40°C | PP sheet-PP sheet | | | O | × | × |
| Production of cross-linked-product | | | | | | |
| Reaction condition | Temperature (°C) | 50 | 50 | 50 | 100 | 100 |
| | Time | 3 | 3 | 3 | 3 | 3 |
| Physical properties of cross-linked-produc t | (hour) [η] (dL/g) | 0.54 | Not measurable | 0.67 | 1.36 | 0.88 |

The modified α-olefin polymer in the present invention is appropriate in a molecular weight distribution and a composition distribution, good in low temperature coating performance required for a reactive hot melt adhesive because of low melting temperature and high reactivity, compatibility and adhesiveness as compared to conventional unmodified α-olefin polymers, and also it does not generate decomposed gas because of a polyolefin-based material and is good in adhesiveness to polyolefins.
Therefore, the modified α-olefin polymer in the present invention is suitably used not only as reactive hot melt adhesives, but also as sealants, modifiers for resin and elastomer, wax blending agents, filler blending agents, resin modifiers, paint components, ink components, adhesive components, primer components, lubricating oil components, heat storage components and high performance waxes.
The present invention also allows producing cross-linked products of the modified α-olefin polymers to which reactivity is imparted by modification with silane. The modification enables them to exhibit strong adhesiveness.

## Claims

1. A modified α-olefin polymer obtained by reacting the following (i), (ii) and (iii) together:
(i) an α-olefin polymer obtained by homopolymerization of an α-olefin having 3 or more carbon atoms or copolymerization of two or more kinds of an α-olefin having 3 or more carbon atoms in the presence of a polymerization catalyst containing (A) a transition metal compound represented by the following general formula (I) and (B) at least one component selected from (B-1) a compound capable of forming an ionic complex by reacting with said (A) component of the transition metal compound or a derivative thereof and (B-2) an aluminoxane, satisfying the following (1) to (3) of
(1) a mesopentad fraction (mmmm) in a range of 25 to 75 mol % or a stereoregularity index ([M4]) of 75 mol % or less,
(2) a molecular weight distribution converted to polystyrene equivalent determined by a gel permeation chromatography (GPC) method of 3.0 or less and
(3) an intrinsic viscosity [η] determined in a tetralin solvent at 135°C of 0.01 to 5.0 dL/g,
(ii) a radical initiator and
(iii) a monomer with a silane group and an ethylenic unsaturated group or silane coupling agent, 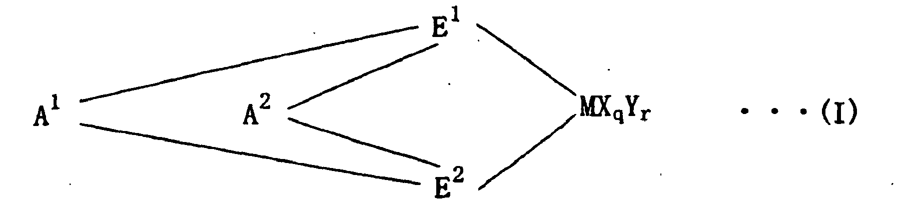 (in which M represents a metal element in group 3 to 10 of the periodic table or a lanthanidemetal element, E¹ and E² each represent a ligand selected from substituted cyclopentadienyl, indenyl, substituted indenyl, heterocyclopentadienyl, substituted heterocyclopentadienyl, amide, phosphide, hydrocarbon and silicon-containing groups to form a cross-linked structure through A¹ and A² and may be identical or different each other, X represents a σ-bonding ligand and a plurality of X may be identical or different and cross-linked with other X, E¹, E² or Y when X are plural, Y represents a Lewis base and a plurality of Y may be identical or different and cross-linked with other Y, E¹, E² or X when Y is plural, A¹ and A² are a divalent cross-linking group linking two ligands and represent a hydrocarbon group having 1 to 20 carbon atoms, a halogen-containing hydrocarbon group having 1 to 20 carbon atoms, a silicon-containing group, a germanium-containing group, tin-containing group, -O-, -CO-, -S-, -SO₂-, -Se-, -NR¹-, -PR¹-, -P(O)R¹-, -BR¹- or -AlR¹- and R¹ represents a hydrogen atom, halogen atom, a hydrocarbon group having 1 to 20 carbon atoms or a halogen-containing hydrocarbon group having 1 to 20 carbon atoms and may be identical or different from each other, the letter q is an integer of I to 5 indicating [(valency of M) - 2] and r represents an integer of 0 to 3).

2. The modified α-olefin polymer according to claim 1 satisfying (1) to (4) below:
(1) a mesopentad fraction (mmmm) in a range of 25 to 75 mol % or a stereo-regularity index ([M4]) of 75 mol % or less,
(2) a molecular weight (Mw) converted to polystyrene equivalent determined by GPC and Mw/Mn are 1000 to 10,000,000 and 1.5 or higher, respectively,
(3) a content of the component derived from a monomer with the silane group and the ethylenic unsaturated group is 0.01 to 50 mol % and
(4) a melting point in a range of 40 to 100°C.

3. The modified α-olefin polymer according to claim 1 or 2, wherein the monomer with the silane group and the ethylenic unsaturated group is a monomer having an alkoxysilane group.

4. The modified α-olefin polymers in any of claims 1 to 3, wherein the α-olefin having 3 or more carbon atoms is selected from one kind or more of propylene, 1 -butene, 1-pentene, 1-hexene, 1-octene, 1-nonene, 1-decene (C₁₀), 1-dodecene (C₁₂), 1-tetradecene (C₁₄), 1-hexadecene (C₁₆), 1-octadecene (C₁₈), 1-eicosene (C₂₀), 1-dodecosene (C₂₂), 1-tetracosene (C₂₄), 1-hexacosene (C₂₆), 1-octacosene (C₂₈) and 1-triacontesene (C₃₀).

5. The modified α-olefin polymer in any of claims 1 to 4 obtained by melt kneading and/or solution modification.

6. The modified α-olefin polymer in any of claims 1 to 5 used in any one of (reactive) hot melt adhesives, intermediate films for glass, adhesives for glass, sealants, modifiers for resin and elastomer, wax blending agents, filler blending agents, resin modifiers, paint components, ink components, adhesive components, primer components, lubricating oil components, heat storage components, high performance waxes, cement components, medical equipments, films, sheets, release films, caulking materials, cable sheaths, electric wire clads, insulation materials, pipes, heat shrink tapes and dispersants.

7. A process for production of a cross-linked product of the modified α-olefin polymer by contacting and heating the modified α-olefin polymer according to any of claims 1 to 6 with moisture or damp in the presence or absence of a silanol condensation catalyst.

## Patentansprüche

1. Ein modifiziertes α-Olefin-Polymer, erhalten durch das Umsetzen der folgenden (i), (ii) und (iii) miteinander:
(i) ein α-Olefin-Polymer, erhalten durch Homopolymerisation eines α-Olefins mit 3 oder mehr Kohlenstoffatomen oder Copolymerisation von zwei oder mehreren Arten eines α-Olefins mit 3 oder mehr Kohlenstoffatomen in Gegenwart eines Polymerisationskatalysators, der (A) eine Übergangsmetallverbindung, dargestellt durch die folgende allgemeine Formel (I), und (B) mindestens einen Bestandteil, ausgewählt aus (B-1) einer Verbindung, die durch Umsetzung mit dem Bestandteil (A) der Übergangsmetallverbindung oder einem Derivat davon einen Ionenkomplex bilden kann, und (B-2) einem Aluminoxan, das die folgenden Bedingungen (1) bis (3) erfüllt,
(1) ein Mesopentad-Anteil (mmmm) in einem Bereich von 25 bis 75 Mol-% oder ein Stereoregularitätsindex ([M4]) von 75 Mol-% oder weniger,
(2) eine Molekulargewichtsverteilung, umgewandelt in ein Polystyroiäquivalent, bestimmt durch ein Gelpermeationschromatographie-(GPC)-Verfahren, von 3,0 oder weniger, und
(3) eine intrinsische Viskosität [η], bestimmt in einem Tetralinlösungsmittel bei 135°C, von 0,01 bis 5,0 dL/g,
enthält,
(ii) ein Radikalinitiator und
(iii) ein Monomer mit einem Silanrest und einem ethylenisch ungesättigten Rest oder ein Silankupplungsmittel, 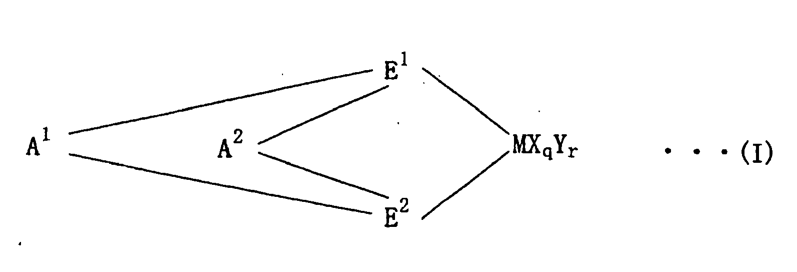 (wobei M ein Metallelement der Gruppe 3 bis 10 des Periodensystems oder ein Lanthanidmetallelement darstellt, E¹ und E² jeweils einen Liganden, ausgewählt aus substituiertem Cyclopentadienyl, Indenyl, substituiertem Indenyl, Heterocyclopentadienyl, substituiertem Heterocyclopentadienyl, Amid, Phosphid, Kohlenwasserstoff und Silicium-enthaltenden Resten, um eine vernetzte Struktur durch A¹ und A² zu bilden, darstellen und gleich oder voneinander verschieden sein können, X einen σ-bindenden Liganden darstellt und eine Mehrzahl an X gleich oder verschieden sein kann und mit einem anderen X, E¹, E² oder Y vernetzt sein kann, wenn X mehrfach vorhanden ist, Y eine Lewis-Base darstellt und eine Mehrzahl an Y gleich oder verschieden sein kann und mit einem anderen Y, E¹, E² oder X vernetzt sein kann, wenn Y mehrfach vorhanden ist, A¹ und A² ein zweiwertiger vernetzender Rest sind, der zwei Liganden verbindet, und einen Kohlenwasserstoffrest mit 1 bis 20 Kohlenstoffatomen, einen Halogen-enthaltenden Rest mit 1 bis 20 Kohlenstoffatomen, einen Silicium-enthaltenden Rest, einen Germanium-enthaltenden Rest, einen Zinn-enthaltenden Rest, -O-, -CO-, -S-, -SO₂-, -Se-, -NR¹-, -PR¹-, -P(O)R¹-, -BR¹- oder -AlR¹-darstellen und R¹ ein Wasserstoffatom, ein Halogenatom, einen Kohlenwasserstoffrest mit 1 bis 20 Kohlenstoffatomen oder einen Halogen-enthaltenden Kohlenwasserstoffrest mit 1 bis 20 Kohlenstoffatomen darstellt und gleich oder voneinander verschieden sein kann, der Buchstabe q eine ganze Zahl von 1 bis 5 ist, der [(Valenz von M)-2] angibt, und r eine ganze Zahl von 0 bis 3 darstellt).

2. Das modifizierte α-Olefin-Polymer gemäß Anspruch 1, das die nachstehenden Bedingungen (1) bis (4) erfüllt:
(1) ein Mesopentad-Anteil (mmmm) in einem Bereich von 25 bis 75 Mol-% oder ein Stereoregularitätsindex ([M4]) von 75 Mol-% oder weniger,
(2) ein Molekulargewicht (Mw), umgewandelt in ein Polystyroläquivalent, bestimmt durch GPC, und ein Mw/Mn, die 1000 bis 10.000.000 beziehungsweise 1,5 oder höher betragen,
(3) ein Gehalt des von einem Monomer mit dem Silanrest und dem ethylenisch ungesättigten Rest abgeleiteten Bestandteil, der 0,01 bis 50 Mol-% beträgt, und
(4) ein Schmelzpunkt in einem Bereich von 40 bis 100°C.

3. Das modifizierte α-Olefin-Polymer gemäß Anspruch 1 oder 2, wobei das Monomer mit dem Silanrest und dem ethylenisch ungesättigten Rest ein Monomer mit einem Alkoxysilanrest ist.

4. Die modifizierten α-Olefin-Polymere gemäß einem der Ansprüche 1 bis 3, wobei das α-Olefin mit 3 oder mehr Kohlenstoffatomen ausgewählt ist aus einer Art oder mehreren aus Propylen, 1-Buten, 1-Penten, 1-Hexen, 1-Octen, 1-Nonen, 1-Decen(C₁₀), 1-Dodecen(C₁₂), 1-Tetradecen(C₁₄), 1-Hexadecen(C₁₆), 1-Octadecen(C₁₈), 1 -Eicosen(C₂₀), 1-Dodecosen(C₂₂), 1-Tetracosen(C₂₄), 1-Hexacosen(C₂₆), 1-Octacosen(C₂₈) und 1-Triacontesen(C₃₀).

5. Das modifizierte α-Olefin-Polymer gemäß einem der Ansprüche 1 bis 4, erhalten durch Schmelzkneten und/oder Modifizieren einer Lösung.

6. Das modifizierte α-Olefin-Polymer gemäß einem der Ansprüche 1 bis 5, verwendet in einem aus (reaktiven) Schmelzklebstoffen, Zwischenfolien für Glas, Klebstoffen für Glas, Dichtungsmitteln, Modifikatoren für Harz und Elastomer, Wachsmischungsmitteln, Füllstoffmischungsmitteln, Harzmodifikatoren, Farbbestandteilen, Tintenbestandteilen, Haftbestandteilen, Primerbestandteilen, Schmierölbestandteilen, Wärmespeicherbestandteilen, Hochleistungswachsen, Zementbestandteilen, medizinischer Ausrüstung, Folien, Bahnenmaterialien, Trennfolien, Dichtungsmaterialien, Kabelummantelungen, elektrischen Leitungsplatten, Isoliermaterialien, Rohren, Wärmeschrumpfbändem und Dispergiermitteln.

7. Ein Verfahren zur Herstellung eines vernetzten Produkts aus dem modifizierten α-Olefin-Polymer durch Kontaktieren und Erwärmen des modifizierten α-Olefin-Polymers gemäß einem der Ansprüche 1 bis 6 mit Feuchtigkeit oder Dampf in Gegenwart oder Abwesenheit eines Silanolkondensationskatalysators.

## Revendications

1. Polymère α-oléfinique modifié obtenu par la mise en réaction ensemble des (i), (ii) et (iii) suivants:
(i) un polymère α-oléfinique obtenu par homopolymérisation d'une α-oléfine comprenant 3 atomes de carbone ou plus ou par copolymérisation de deux types ou plus d'une α-oléfine comprenant 3 atomes de carbone ou plus en présence d'un catalyseur de polymérisation contenant (A) un composé d'un métal de transition représenté par la formule générale (I) suivante et (B) au moins un composant choisi parmi (B-1) un composé capable de former un complexe ionique en réagissant avec ledit composé d'un métal de transition (A) ou un dérivé de celui-ci et (B-2) un aluminoxane, satisfaisant les caractéristiques (1) à (3) suivantes :
(1) une fraction de mésopentad (mmmm) comprise dans la plage de 25 à 75 % en moles ou un indice de stéréorégularité ([M4]) de 75 % en moles ou moins,
(2) une distribution de poids moléculaire convertie en équivalent de polystyrène déterminée par une méthode par chromatographie de filtration sur gel (GPC) de 3,0 ou moins, et
(3) une viscosité intrinsèque [η] déterminée dans un solvant de tétraline à 135 °C de 0,01 à 5,0 dl/g,
(ii) un initiateur radicalaire, et
(iii) un monomère ayant un groupe silane et un groupe insaturé éthylénique ou un agent adhésif de silane, 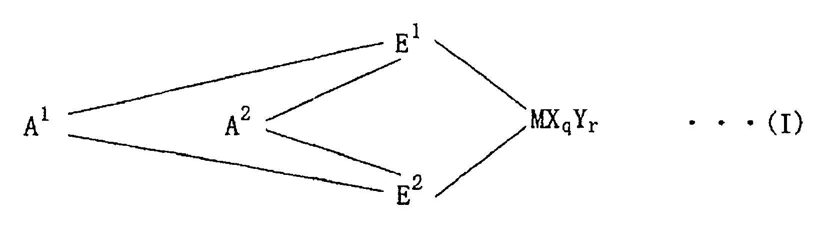 (dans laquelle M représente un élément métallique des groupes 3 à 10 du tableau périodique ou un élément métallique du groupe des lanthanides, E¹ et E² représentent chacun un ligand choisi parmi un groupe cyclopentadiényle substitué, indényle, indényle substitué, hétérocyclopentadiényle, hétérocyclopentadiényle substitué, un amide, un phosphure, un hydrocarbure et des groupes contenant un atome de silicium pour former une structure réticulée par l'intermédiaire de A¹ et A² et peuvent être identiques ou différents l'un de l'autre, X représente un ligand σ-liant et une pluralité de X peuvent être identiques ou différents et réticulés avec d'autres X, E¹, E² ou Y lorsqu'il y a plusieurs X, Y représente une base de Lewis et une pluralité de Y peuvent être identiques ou différents et réticulés avec les autres Y, E¹, E² ou X lorsqu'il y a plusieurs Y, A¹ et A² sont un groupe de réticulation divalent liant 2 ligands et représentent un groupe hydrocarboné comprenant de 1 à 20 atomes de carbone, un groupe hydrocarboné contenant un atome d'halogène comprenant de 1 à 20 atomes de carbone, un groupe contenant un atome de silicium, un groupe contenant un atome de germanium, un groupe contenant un atome d'étain, -O-, -CO-, -S-, -SO₂-, -Se-, -NR¹-, -PR¹-, -P(O)R¹-, -BR¹- ou -AlR¹- et R¹ représente un atome d'hydrogène, un atome d'halogène, un groupe hydrocarboné comprenant de 1 à 20 atomes de carbone ou un groupe hydrocarboné contenant un atome d'halogène comprenant de 1 à 20 atomes de carbone et ils peuvent être identiques ou différents les uns des autres, la lettre q est un nombre entier de 1 à 5 indiquant la [(valence de M) - 2] et r représente un nombre entier de 0 à 3).

2. Polymère α-oléfinique modifié selon la revendication 1, satisfaisant (1) à (4) ci-dessous :
(1) une fraction de mésopentad (mmmm) comprise dans la plage de 25 à 75 % en moles ou un indice de stéréorégularité ([M4]) de 75 % en moles ou moins,
(2) un poids moléculaire (Mm) converti en équivalent de polystyrène déterminé par GPC et Mm/Mn sont de 1 000 à 10 000 000 et 1,5 ou plus, respectivement,
(3) une teneur en composant dérivé d'un monomère ayant le groupe silane et un groupe insaturé éthylénique de 0,01 à 50 % en moles, et
(4) un point de fusion compris dans la plage de 40 à 100°C.

3. Polymère α-oléfinique modifié selon la revendication 1 ou 2, dans lequel le monomère ayant le groupe silane et le groupe à insaturation éthylénique est un monomère comprenant un groupe alcoxysilane.

4. Polymère α-oléfinique modifié selon l'une quelconque des revendications 1 à 3, dans lequel l'α-oléfine comprenant 3 atomes de carbone ou plus est choisie parmi un ou plusieurs types parmi : propylène, 1-butène, 1-pentène, 1-hexène, 1-octène, 1-nonène, 1-décène (C₁₀), 1-dodécène (C₁₂), 1-tétradécène (C₁₄), 1-hexadécène (C₁₆), 1-octadécène (C₁₈), 1-éicosène (C₂₀), 1-dodécosène (C₂₂), 1-tétracosène (C₂₄), 1-hexacosène (C₂₆), 1-octacosène (C₂₈) et 1-triacontésène (C₃₀).

5. Polymère α-oléfinique modifié selon l'une quelconque des revendications 1 à 4, obtenu par malaxage à l'état fondu et/ou modification de solution.

6. Polymère α-oléfinique modifié selon l'une quelconque des revendications 1 à 5, utilisé dans l'un quelconque des adhésifs thermofusibles (réactifs), films intermédiaires pour le verre, adhésifs pour le verre, joints d'étanchéité, modificateurs pour résine et un élastomère, agents de mélange de cire, agents de mélange de charge, modificateurs de résine, composants pour peintures, composants pour encres, composants pour adhésifs, composants pour couche d'apprêt, composants pour huiles lubrifiantes, composants pour accumulateurs thermiques, cires à haute performance, composants pour ciment, équipements médicaux, films, feuilles, films pelliculables, matériaux de calfeutrage, gaines de câble, gaines de fils électriques, matériaux d'isolation, tuyaux, bandes thermorétractables et agents dispersants.

7. Procédé de production d'un produit réticulé du polymère α-oléfinique modifié en mettant en contact et en chauffant le polymère α-oléfinique modifié selon l'une quelconque des revendications 1 à 6 avec de la vapeur d'eau ou un air humide en présence ou en l'absence d'un catalyseur de condensation à base de silanol.
